# EUROPEAN PATENT APPLICATION

(11) **EP 4 510 719 A1**
(43) Date of publication of application: **19.02.2025**
(21) Application number: 23788389.7
(22) Date of filing: 13.04.2023
(51) Int. Cl.: H04W 56/00, H04W 28/04

(54) **TERMINAL DEVICE, BASE STATION DEVICE, AND COMMUNICATION METHOD**

(30) Priority: 13.04.2022 JP 2022066026
(71) Applicant: Sharp Kabushiki Kaisha, Sakai City, Osaka 590-8522 (JP)
(72) Inventor: FUKUI Takahisa, Sakai City, Osaka 590-8522 (JP); YOKOMAKURA Kazunari, Sakai City, Osaka 590-8522 (JP); MORIMOTO Ryota, Sakai City, Osaka 590-8522 (JP)
(74) Representative: Müller-Boré & Partner Patentanwälte PartG mbB
(86) International application number: PCT/JP2023/014982
(87) International publication number: WO 2023/199971

(57) **Abstract**

A radio resource control layer processing unit that configures a first time alignment timer and a second time alignment timer for one serving cell, and a medium access control layer processing unit are provided, the medium access control layer processing unit starts or restarts the first time alignment timer based at least on reception of a first TA command, the medium access control layer processing unit starts or restarts the second time alignment timer based at least on reception of a second TA command, and in a case that the first time alignment timer or the second time alignment timer expires, the medium access control layer processing unit flushes all HARQ buffers for the one serving cell.

## Description

### Technical Field

The present invention relates to a terminal apparatus, a base station apparatus, and a communication method.

This application claims priority to JP 2022-66026 filed on April 13, 2022, the contents of which are incorporated herein by reference.

### Background Art

In the 3^{rd} Generation Partnership Project (3GPP, trade name), a radio access method and a radio network for cellular mobile communications (hereinafter also referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in a form of cells. A single base station apparatus may manage multiple serving cells.

The 3GPP has been studying a next generation standard (New Radio or NR) (NPL 1) to make a proposal for International Mobile Telecommunication (IMT)-2020, a standard for a next generation mobile communication system developed by the International Telecommunication Union (ITU). NR is to satisfy requirements for three scenarios including enhanced Mobile BroadBand (eMBB), massive Machine Type Communication (mMTC), and Ultra Reliable and Low Latency Communication (URLLC) in a single technology framework.

In the 3GPP, extension of services supported by NR has been studied (NPL 2).

### Citation List

### Non Patent Literature

NPL 1: "New SID proposal: Study on New Radio Access Technology", RP-160671, NTT docomo, 3GPP TSG RAN Meeting #71, Goteborg, Sweden, 7th to 10th March, 2016.
NPL 2: "Release 17 package for RAN", RP-193216, RAN chairman, RAN1 chairman, RAN2 chairman, RAN3 chairman, 3GPP TSG RAN Meeting #86, Sitges, Spain, 9th to 12th December, 2019
NPL 3: "Release 18 package summary", RP-213469, RAN chairman, RAN1 chairman, RAN2 chairman, RAN3 chairman, 3GPP TSG RAN Meeting #94-e, 6th to 17th December, 2021

### Summary of Invention

### Technical Problem

An aspect of the present invention provides a terminal apparatus that efficiently performs communication, a communication method used for the terminal apparatus, a base station apparatus that efficiently performs communication, and a communication method used for the base station apparatus.

### Solution to Problem

(1) A first aspect of the present invention is a terminal apparatus including a transmission unit that transmits a first random access preamble in first random access and transmits a second random access preamble in second random access, and a reception unit that receives a first TA command in the first random access and receives a second TA command in the second random access, in which a first uplink timing is adjusted in one serving cell based at least on the first TA command, a second uplink timing is adjusted in the one serving cell based at least on the second TA command, and one of the first uplink timing and the second uplink timing is used based on certain information.
(2) In addition, a second aspect of the present invention is a base station apparatus including a reception unit that receives a first random access preamble in first random access and receives a second random access preamble in second random access, and a transmission unit that transmits a first TA command in the first random access and transmits a second TA command in the second random access, in which a first uplink timing is adjusted in one serving cell based at least on the first TA command, a second uplink timing is adjusted in the one serving cell based at least on the second TA command, and one of the first uplink timing and the second uplink timing is used based on certain information.
(3) In addition, a third aspect of the present invention is a communication method used in a terminal apparatus, including a step of transmitting a first random access preamble in first random access and transmitting a second random access preamble in second random access, and a step of receiving a first TA command in the first random access and receiving a second TA command in the second random access, in which a first uplink timing is adjusted in one serving cell based at least on the first TA command, a second uplink timing is adjusted in the one serving cell based at least on the second TA command, and one of the first uplink timing and the second uplink timing is used based on certain information.
(4) In addition, a fourth aspect of the present invention is a communication method used a base station apparatus, including a step of receiving a first random access preamble in first random access and receiving a second random access preamble in second random access, and a step of transmitting a first TA command in the first random access and transmitting a second TA command in the second random access, in which a first uplink timing is adjusted in one serving cell based at least on the first TA command, a second uplink timing is adjusted in the one serving cell based at least on the second TA command, and one of the first uplink timing and the second uplink timing is used based on certain information.
(5) A fifth aspect of the present invention is a terminal apparatus including a radio resource control layer processing unit that configures a first time alignment timer and a second time alignment timer for one serving cell, and a medium access control layer processing unit, in which the medium access control layer processing unit starts or restarts the first time alignment timer based at least on reception of a first TA command, the medium access control layer processing unit starts or restarts the second time alignment timer based at least on reception of a second TA command, and in a case that the first time alignment timer or the second time alignment timer expires, the medium access control layer processing unit flushes all HARQ buffers for the one serving cell.
(6) A sixth aspect of the present invention is a base station apparatus including a radio resource control layer processing unit that configures a first time alignment timer and a second time alignment timer for one serving cell, and a medium access control layer processing unit, in which the medium access control layer processing unit starts or restarts the first time alignment timer based at least on reception of a first TA command, the medium access control layer processing unit starts or restarts the second time alignment timer based at least on reception of a second TA command, and in a case that the first time alignment timer or the second time alignment timer expires, the medium access control layer processing unit flushes all HARQ buffers for the one serving cell.
(7) In addition, a seventh aspect of the present invention is a communication method used in a terminal apparatus including a first step by a radio resource control layer processing unit configuring a first time alignment timer and a second time alignment timer for one serving cell, and a second step by a medium access control layer processing unit, in which, in the first step, the medium access control layer processing unit starts or restarts the first time alignment timer based at least on reception of a first TA command, in the first step, the medium access control layer processing unit starts or restarts the second time alignment timer based at least on reception of a second TA command, and in a case that the first time alignment timer or the second time alignment timer expires in the first step, the medium access control layer processing unit flushes all HARQ buffers for the one serving cell.
(8) In addition, an eighth aspect of the present invention is a communication method used in a base station apparatus including a first step by a radio resource control layer processing unit configuring a first time alignment timer and a second time alignment timer for one serving cell, and a second step by a medium access control layer processing unit, in which, in the first step, the medium access control layer processing unit starts or restarts the first time alignment timer based at least on reception of a first TA command, in the first step, the medium access control layer processing unit starts or restarts the second time alignment timer based at least on reception of a second TA command, and in a case that the first time alignment timer or the second time alignment timer expires in the first step, the medium access control layer processing unit flushes all HARQ buffers for the one serving cell.

### Advantageous Effects of Invention

According to an aspect of the present invention, the terminal apparatus can efficiently perform communication. The base station apparatus can efficiently perform communication.

### Brief Description of Drawings

FIG. 1 is a conceptual diagram of a radio communication system according to an aspect of the present embodiment.
FIG. 2 is an example illustrating a relationship between the subcarrier spacing configuration µ, the number of OFDM symbols per slot N^{slot}_{symb}, and a cyclic Prefix (CP) configuration according to an aspect of the present embodiment.
FIG. 3 is a diagram illustrating an example of a configuration method of a resource grid according to an aspect of the present embodiment.
FIG. 4 is a diagram illustrating a configuration example of a resource grid 3001 according to an aspect of the present embodiment.
FIG. 5 is a schematic block diagram illustrating a configuration example of a base station apparatus 3 according to an aspect of the present embodiment.
FIG. 6 is a schematic block diagram illustrating a configuration example of a terminal apparatus 1 according to an aspect of the present embodiment.
FIG. 7 is a diagram illustrating a configuration example of an SS/PBCH block according to an aspect of the present embodiment.
FIG. 8 is a diagram illustrating an example of monitoring occasions for search space sets according to an aspect of the present embodiment.
FIG. 9 is a diagram illustrating an example of transmission on two uplink channels in one serving cell according to an aspect of the present embodiment.

### Description of Embodiments

An embodiment of the present invention will be described below.

floor(C) may be a floor function for a real number C. For example, floor(C) may be a function that outputs a maximum integer in a range of not exceeding the real number C. ceil(D) may be a ceiling function for a real number D. For example, ceil(D) may be a function that outputs a minimum integer in a range of not falling below the real number D. mod(E, F) may be a function that outputs a remainder obtained by dividing E by F. mod(E, F) may be a function that outputs a value corresponding to the remainder obtained by dividing E by F. exp(G) = e^G. Here, e is a Napier's constant. H^I represents H to the power of I. max(J, K) is a function that outputs a maximum value between J and K. Here, in a case that J and K are equal, max(J, K) is a function that outputs J or K. min(L, M) is a function that outputs a maximum value between L and M. Here, in a case that L and M are equal, min(L, M) is a function that outputs L or M. round(N) is a function that outputs an integer value of the value closest to N. "·" represents multiplication.

In the radio communication system according to an aspect of the present embodiment, at least Orthogonal Frequency Division Multiplexing (OFDM) is used. An OFDM symbol is the unit of OFDM in the time domain. An OFDM symbol includes at least one or multiple subcarriers. An OFDM symbol is converted into a time-continuous signal in generation of a baseband signal. In downlink, at least Cyclic Prefix-Orthogonal Frequency Division Multiplexing (CP-OFDM) is used. In uplink, either CP-OFDM or Discrete Fourier Transform-spread-Orthogonal Frequency Division Multiplexing (DFT-s-OFDM) is used. DFT-s-OFDM may be given by applying Transform precoding to CP-OFDM.

An OFDM symbol may be a term including a CP added to an OFDM symbol. That is, a certain OFDM symbol may include the certain OFDM symbol and a CP added to the certain OFDM symbol.

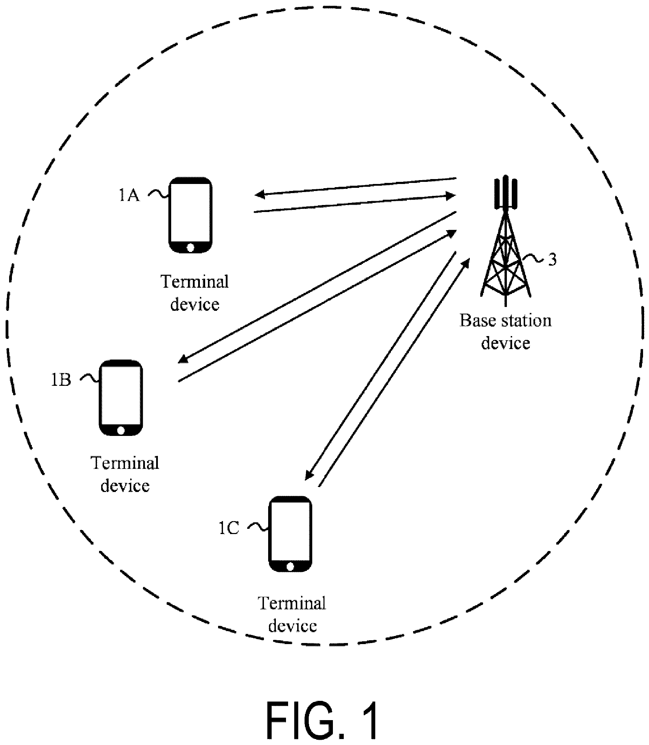

FIG. 1 is a conceptual diagram of a radio communication system according to an aspect of the present embodiment. In FIG. 1, the radio communication system includes at least terminal apparatuses 1A to 1C and a base station apparatus 3 (base station #3 (BS #3)). Hereinafter, the terminal apparatuses 1A to 1C are also referred to as terminal apparatuses 1 (user equipment #1 (UE #1)).

The base station apparatus 3 may include one or multiple transmission apparatuses (or transmission points, transmission and/or reception apparatuses, or transmission and/or reception points). In a case that the base station apparatus 3 includes multiple transmission apparatuses, the multiple transmission apparatuses may be arranged at different positions. For example, the base station apparatus 3 may include a transmission apparatus 3a and a transmission apparatus 3b. For example, the base station apparatus 3 may include a transmission and/or reception point 3a and a transmission and/or reception point 3b. For example, the base station apparatus 3 may include a transmission and/or reception apparatus 3a and a transmission and/or reception apparatus 3b.

The base station apparatus 3 may provide one or multiple serving cells. Each serving cell may be defined as a set of resources used for radio communication. In addition, a serving cell is also referred to as a cell.

The serving cell may include one or both of one downlink component carrier (downlink carrier) and one uplink component carrier (uplink carrier). The serving cell may include one or both of two or more downlink component carriers, and two or more uplink component carriers. The downlink component carrier and the uplink component carrier are also collectively referred to as a component carrier (carrier).

For example, for each component carrier, one resource grid may be given. In addition, one resource grid may be given to each set of one component carrier and a certain subcarrier spacing configuration µ. Here, the subcarrier spacing configuration µ is also referred to as numerology. For example, one resource grid may be given to a set of a certain antenna port p, a certain subcarrier spacing configuration µ, and a certain transmission direction x.

A resource grid includes N^{size, µ}_{grid, x}N^{RB}_{sc} subcarriers. Here, the resource grid starts from a common resource block N^{start, µ}_{grid, x.} In addition, the common resource block N^{start, µ}_{grid, x} is also referred to as a reference point of the resource grid.

The resource grid includes N^{subframe, µ}_{symb} OFDM symbols.

The subscript x added to the parameter associated with the resource grid indicates a transmission direction. For example, the subscript x may be used to indicate either of downlink or uplink.

N^{size, µ}_{grid, x} is an offset configuration indicated by a parameter provided by an RRC layer (e.g., a parameter CarrierBandwidth). N^{start, µ}_{grid, x} is a band configuration indicated by a parameter provided by the RRC layer (e.g., parameter, OffsetToCarrier). The offset configuration and the band configuration are configurations used for configuring an SCS-specific carrier.

The SubCarrier Spacing (SCS) Δf for a certain subcarrier spacing configuration µ may satisfy Δf = 2^{µ} * 15 kHz. Here, the subcarrier spacing configuration µ may indicate any one of 0, 1, 2, 3, or 4.

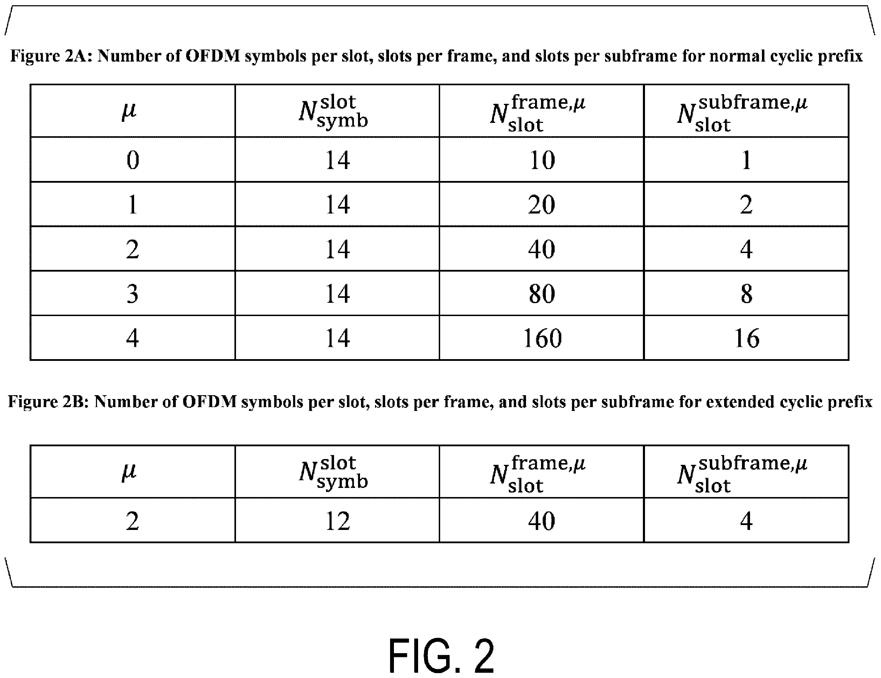

FIG. 2 is an example illustrating a relationship between the subcarrier spacing configuration µ, the number of OFDM symbols per slot N^{slot}_{symb}, and a cyclic prefix (CP) configuration according to an aspect of the present embodiment. In FIG. 2A, for example, in a case that the subcarrier spacing configuration µ is 2 and the CP configuration is a normal cyclic prefix (normal CP), N^{slot}_{symb} = 14, N^{frame, µ}ₛₗₒₜ = 40, and N^{subframe, µ}ₛₗₒₜ = 4. In addition, in FIG. 2B, for example, in a case that the subcarrier spacing configuration µ is 2 and the CP configuration is an extended cyclic prefix (extended CP), N^{slot}_{symb} = 12, N^{frame, µ}ₛₗₒₜ = 40, and N^{subframe, µ}ₛₗₒₜ = 4.

A time unit T_{c} may be used to represent the length of the time domain. The time unit T_{c} satisfies T_{c} = 1/(Δfₘₐₓ · N_{f}). Δfₘₐₓ = 480 kHz. N_{f} = 4096. A constant κ satisfies κ = Δfₘₐₓ · N_{f}/(Δf_{ref}N_{f, ref}) = 64. Δf_{ref} is 15 kHz. N_{f, ref} is 2048.

Transmission of a signal in downlink and/or transmission of a signal in uplink may be organized into a radio frame (system frame or frame) having a length T_{f}. T_{f} = (ΔfₘₐₓN_{f}/100) · Tₛ = 10 ms. The radio frame includes 10 subframes. The length of the subframe satisfies T_{sf} = (ΔfₘₐₓN_{f}/1000) · Tₛ = 1 ms. The number of OFDM symbols per subframe is N^{subframe, µ}_{symb} = N^{slot}_{symb}N^{subframe, µ}ₛₗₒₜ.

On one carrier, there are a first set of one or multiple frames in uplink and a second set of one or multiple frames in downlink. An uplink frame for transmission from the terminal apparatus 1 is started T_{TA} before the start of a downlink frame. T_{TA} may be (N_{TA} · N_{TA}, _{offset})T_{c}.

An OFDM symbol is the unit of one communication scheme in the time domain. For example, an OFDM symbol may be the unit of CP-OFDM in the time domain. In addition, an OFDM symbol may be the unit of DFT-s-OFDM in the time domain.

A slot may include multiple OFDM symbols. For example, one slot may include N^{slot}_{symb} continuous OFDM symbols. For example, in a normal CP configuration, N^{slot}_{symb} =14 may be satisfied. In addition, in an extended CP configuration, N^{slot}_{symb} = 12 may be satisfied.

For a certain subcarrier spacing configuration µ, the number and indices of slots included in the subframe may be given. For example, slot indices n^{µ}ₛ may be given in ascending order in the subframe with integer values within a range of 0 to N^{subframe, µ}ₛₗₒₜ - 1. For the subcarrier spacing configuration µ, the number and indices of slots included in the radio frame may be given. In addition, slot indices n^{µ}_{s, f} may be given in ascending order in the radio frame with integer values within a range of 0 to N^{frame, µ}ₛₗₒₜ - 1.

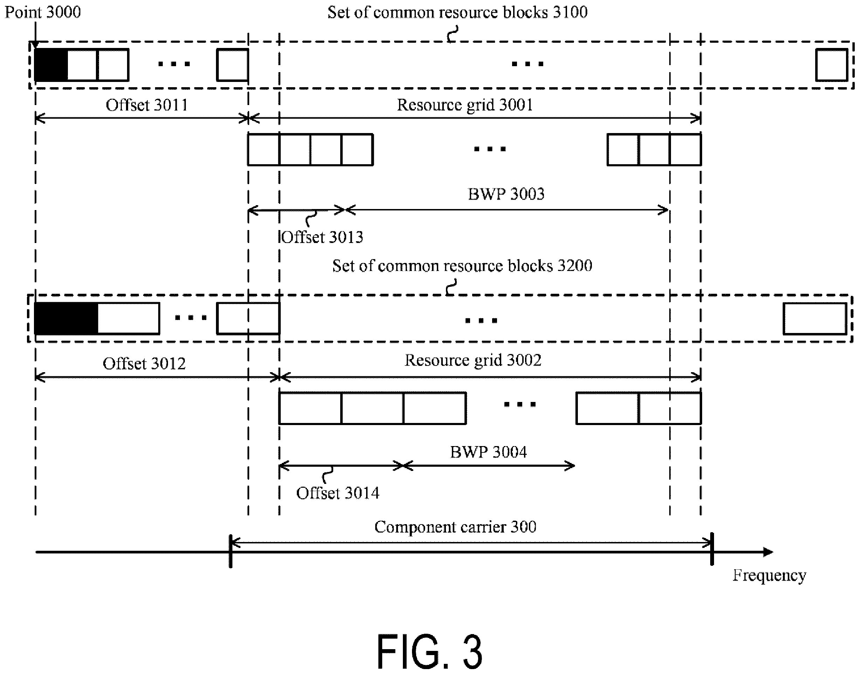

FIG. 3 is a diagram illustrating an example of a method of configuring a resource grid according to an aspect of the present embodiment. The horizontal axis of FIG. 3 represents frequency domain. FIG. 3 illustrates a configuration example of a resource grid of a subcarrier spacing µ₁ in a component carrier 300, and a configuration example of a resource grid of a subcarrier spacing µ₂ in the certain component carrier. As described above, for a certain component carrier, one or multiple subcarrier spacings may be configured. In FIG. 3, although it is assumed that µ₁ = µ₂ - 1, various aspects of the present embodiment are not limited to the condition of µ₁ = µ₂ - 1.

The component carrier 300 is a band having a predetermined width in the frequency domain.

The Point 3000 is an identifier for identifying a certain subcarrier. The point 3000 is also referred to as a point A. A Common resource block (CRB) set 3100 is a set of common resource blocks for a subcarrier spacing configuration µ₁.

In the common resource block set 3100, a common resource block (solid black block in the common resource block set 3100 in FIG. 3) including the point 3000 is also referred to as a reference point of the common resource block set 3100. The reference point of the common resource block set 3100 may be a common resource block having an index 0 in the common resource block set 3100.

An offset 3011 is an offset from the reference point of the common resource block set 3100 to a reference point of a resource grid 3001. The offset 3011 is represented by the number of common resource blocks for the subcarrier spacing configuration µ₁. The resource grid 3001 includes N^{size, µ}_{grid1, x} common resource blocks starting from the reference point of the resource grid 3001.

An offset 3013 is an offset from the reference point of the resource grid 3001 to a reference point (N^{start, µ}_{BWP, i1}) of a Bandwidth Part (BWP) 3003 having an index i1.

A common resource block set 3200 is a set of common resource blocks for a subcarrier spacing configuration µ₂.

In the common resource block set 3200, a common resource block (solid black block in the common resource block set 3200 in FIG. 3) including the point 3000 is also referred to as a reference point of the common resource block set 3200. The reference point of the common resource block set 3200 may be a common resource block having an index 0 in the common resource block set 3200.

An offset 3012 is an offset from the reference point of the common resource block set 3200 to a reference point of a resource grid 3002. The offset 3012 is represented by the number of common resource blocks for the subcarrier spacing µ₂. The resource grid 3002 includes N^{size, µ}_{grid2, x} common resource blocks starting from the reference point of the resource grid 3002.

An offset 3014 is an offset from the reference point of the resource grid 3002 to a reference point (N^{start, µ}_{BWP, i2}) of a BWP 3004 having an index i2.

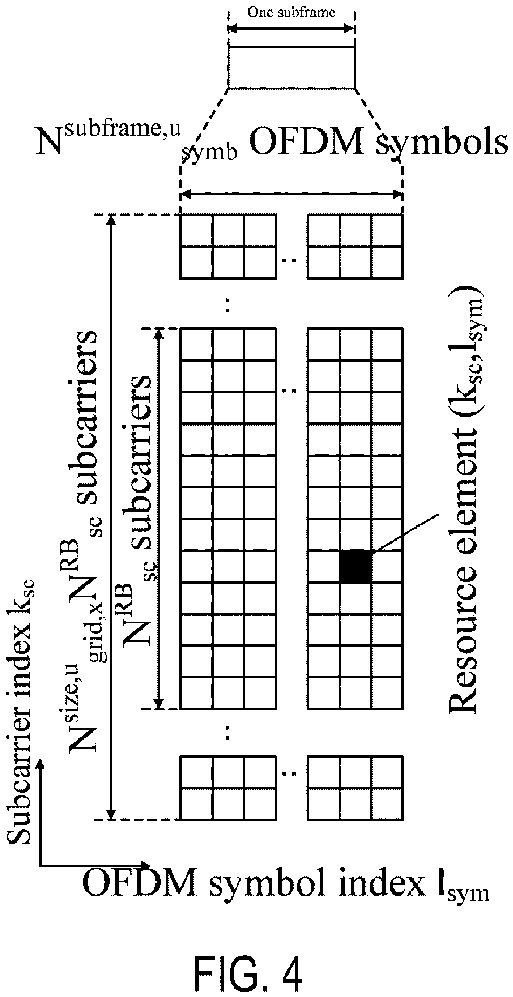

FIG. 4 is a diagram illustrating a configuration example of the resource grid 3001 according to an aspect of the present embodiment. In the resource grid of FIG. 4, the horizontal axis corresponds to an OFDM symbol index l_{sym}, and the vertical axis corresponds to a subcarrier index k_{sc}. The resource grid 3001 includes N^{size, µ}_{grid1, x}N^{RB}_{sc} subcarriers, and N^{subframe, µ}_{symb} OFDM symbols. In the resource grid, a resource identified by the subcarrier index k_{sc} and the OFDM symbol index l_{sym} is also referred to as a Resource Element (RE).

The Resource Block (RB) includes N^{RB}_{sc} consecutive subcarriers. The resource block is a general term for a common resource block, a Physical Resource Block (PRB), and a Virtual Resource Block (VRB). Here, N^{RB}_{sc} is 12.

A resource block unit is a set of resources corresponding to one OFDM symbol in one resource block. That is, one resource block unit includes 12 resource elements corresponding to one OFDM symbol in one resource block.

Common resource blocks for a certain subcarrier spacing configuration µ are assigned indices (indexing) in ascending order from 0 in the frequency domain in a certain common resource block set. The common resource block having the index 0 for a certain subcarrier spacing configuration µ includes (or collides with or matches) the point 3000. An index n^{µ}_{CRB} of the common resource block for a certain subcarrier spacing configuration µ satisfies a relationship of n^{µ}_{CRB} = ceil(k_{sc}/N^{RB}_{sc}). Here, a subcarrier with k_{sc} = 0 is a subcarrier having the same center frequency as the center frequency of a subcarrier corresponding to the point 3000.

Physical resource blocks for a certain subcarrier spacing configuration µ are assigned indices in ascending order from 0 in the frequency domain in a certain BWP. An index n^{µ}_{PRB} of the physical resource block for a certain subcarrier spacing configuration µ satisfies a relationship of n^{µ}_{CRB} = n^{µ}_{PRB} + N^{start, µ}_{BWP, i}. Here, N^{start, µ}_{BWP, i} indicates a reference point of the BWP having an index i.

The BWP is defined as a subset of common resource blocks included in the resource grid. The BWP includes N^{size, µ}_{BWP, i} common resource blocks starting from the reference point N^{start, µ}_{BWP, i} of the BWP. A BWP configured for a downlink carrier is also referred to as a downlink BWP. A BWP configured for an uplink component carrier is also referred to as an uplink BWP.

An antenna port is defined such that the channel over which a symbol on the antenna port is conveyed can be inferred from the channel over which another symbol on the same antenna port is conveyed. For example, the channel may correspond to a physical channel. In addition, the symbol may correspond to an OFDM symbol. In addition, the symbol may also correspond to a resource block unit. In addition, the symbol may correspond to a resource element.

The fact that a large scale property of a channel over which a symbol on one antenna port is conveyed can be inferred from a channel over which a symbol on another antenna port is conveyed is referred to as the two antenna ports being Quasi Co-Located (QCL). Here, the large scale property may include at least long term property of a channel. The large scale property may include at least some or all of delay spread, Doppler spread, Doppler shift, an average gain, an average delay, and a beam parameter (spatial Rx parameter). The fact that the first antenna port and the second antenna port are QCL with respect to a beam parameter may mean that a reception beam assumed by the receiver side for the first antenna port and a reception beam assumed by the receiver side for the second antenna port are the same (correspond to each other). The fact that the first antenna port and the second antenna port are QCL with respect to a beam parameter may mean that a transmission beam assumed by the receiver side for the first antenna port and a transmission beam assumed by the receiver side for the second antenna port are the same (correspond to each other). In a case that the large scale property of a channel over which a symbol on one antenna port is conveyed can be inferred from a channel over which a symbol on another antenna port is conveyed, the terminal apparatus 1 may assume that the two antenna ports are QCL. The fact that two antenna ports are QCL may mean that the two antenna ports are assumed to be QCL.

Carrier aggregation may mean that communication is performed by using multiple serving cells being aggregated. In addition, carrier aggregation may mean that communication is performed by using multiple component carriers being aggregated. In addition, carrier aggregation may mean that communication is performed by using multiple downlink component carriers being aggregated. In addition, carrier aggregation may mean that communication is performed by using multiple uplink component carriers being aggregated.

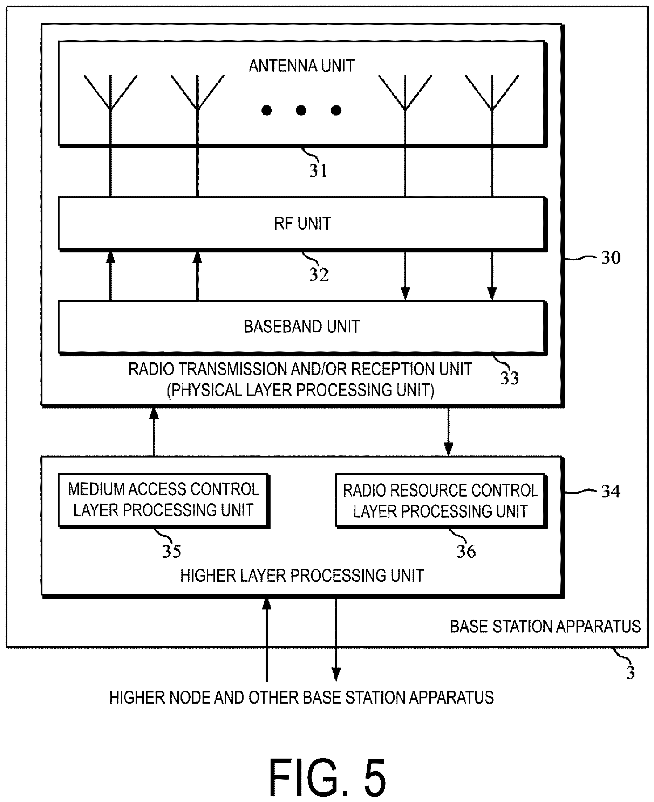

FIG. 5 is a schematic block diagram illustrating a configuration example of the base station apparatus 3 according to an aspect of the present embodiment. As illustrated in FIG. 5, the base station apparatus 3 includes at least some or all of a radio transmission and/or reception unit (physical layer processing unit) 30 and/or a Higher layer processing unit 34. The radio transmission and/or reception unit 30 includes at least some or all of an antenna unit 31, a Radio Frequency (RF) unit 32, and a baseband unit 33. The higher layer processing unit 34 includes at least some or all of a medium access control layer processing unit 35 and a Radio Resource Control (RRC) layer processing unit 36.

The radio transmission and/or reception unit 30 includes at least some or all of a radio transmission unit 30a and a radio reception unit 30b. Here, apparatus configurations of the baseband unit included in the radio transmission unit 30a and the baseband unit included in the radio reception unit 30b may be the same or different from each other. In addition, apparatus configurations of the RF unit included in the radio transmission unit 30a and the RF unit included in the radio reception unit 30b may be the same or different from each other. In addition, apparatus configurations of the antenna unit included in the radio transmission unit 30a and the antenna unit included in the radio reception unit 30b may be the same or different from each other.

For example, the radio transmission unit 30a may generate and transmit a baseband signal of the PDSCH. For example, the radio transmission unit 30a may generate and transmit a baseband signal of the PDCCH. For example, the radio transmission unit 30a may generate and transmit a baseband signal of the PBCH. For example, the radio transmission unit 30a may generate and transmit a baseband signal of a synchronization signal. For example, the radio transmission unit 30a may generate and transmit a baseband signal of the PDSCH DMRS. For example, the radio transmission unit 30a may generate and transmit a baseband signal of the PDCCH DMRS. For example, the radio transmission unit 30a may generate and transmit a baseband signal of the CSI-RS. For example, the radio transmission unit 30a may generate and transmit a baseband signal of the DL PTRS.

For example, the radio reception unit 30b may receive the PRACH. For example, the radio reception unit 30b may receive and demodulate the PUCCH. The radio reception unit 30b may receive and demodulate the PUSCH. For example, the radio reception unit 30b may receive the PUCCH DMRS. For example, the radio reception unit 30b may receive the PUSCH DMRS. For example, the radio reception unit 30b may receive the UL PTRS. For example, the radio reception unit 30b may receive the SRS.

The higher layer processing unit 34 outputs downlink data (a transport block) to the radio transmission and/or reception unit 30 (or the radio transmission unit 30a). The higher layer processing unit 34 performs processing of a Medium Access Control (MAC) layer, a Packet Data Convergence Protocol (PDCP) layer, a Radio Link Control (RLC) layer, and an RRC layer.

The medium access control layer processing unit 35 included in the higher layer processing unit 34 performs processing of the MAC layer. Processing of the MAC layer may be processing of a MAC entity.

The radio resource control layer processing unit 36 included in the higher layer processing unit 34 performs processing of the RRC layer. The radio resource control layer processing unit 36 manages various pieces of configuration information/parameters (RRC parameters) of the terminal apparatus 1. The radio resource control layer processing unit 36 sets a parameter based on an RRC message received from the terminal apparatus 1.

The radio transmission and/or reception unit 30 (or the radio transmission unit 30a) performs processing such as modulation and encoding. The radio transmission and/or reception unit 30 (or the radio transmission unit 30a) generates a physical signal through modulation, encoding, and baseband signal generation (conversion into the time-continuous signal) on the downlink data, and transmits the physical signal to the terminal apparatus 1. The radio transmission and/or reception unit 30 (or the radio transmission unit 30a) may map the physical signal to a certain component carrier and transmit the physical signal to the terminal apparatus 1.

The radio transmission and/or reception unit 30 (or the radio reception unit 30b) performs processing such as demodulation and decoding. The radio transmission and/or reception unit 30 (or the radio reception unit 30b) separates, demodulates, and decodes a received physical signal, and outputs the decoded information to the higher layer processing unit 34. The radio transmission and/or reception unit 30 (or the radio reception unit 30b) may perform a channel access procedure prior to transmission of the physical signal.

The RF unit 32 converts (down-converts) a signal received via the antenna unit 31 into a baseband signal by means of quadrature demodulation and removes unnecessary frequency components. The RF unit 32 outputs a processed analog signal to the baseband unit.

The baseband unit 33 converts an analog signal input from the RF unit 32 into a digital signal. The baseband unit 33 removes a portion corresponding to the Cyclic Prefix (CP) from the converted digital signal, performs a Fast Fourier Transform (FFT) on the signal from which the CP has been removed, and extracts a signal in the frequency domain.

The baseband unit 33 performs an Inverse Fast Fourier Transform (IFFT) on the data to generate an OFDM symbol, adds a CP to the generated OFDM symbol, generates a baseband digital signal, and converts the baseband digital signal into an analog signal. The baseband unit 33 outputs the converted analog signal to the RF unit 32.

The RF unit 32 removes an unnecessary frequency component from the analog signal input from the baseband unit 33 by using a low-pass filter, up-converts the analog signal into a signal having a carrier frequency, and transmits the signal via the antenna unit 31. In addition, the RF unit 32 may have a function of controlling transmission power. The RF unit 32 is also referred to as a transmission power control unit.

For the terminal apparatus 1, one or multiple serving cells (or component carriers, downlink component carriers, uplink component carriers) may be configured.

Each of the serving cells configured for the terminal apparatus 1 may be one of a Primary cell (PCell), a Primary SCG cell (PSCell), or a Secondary Cell (SCell). An SpCell may be one or both of a PCell and a PSCell.

A PCell is a serving cell included in a Master Cell Group (MCG). A PCell is a cell in which an initial connection establishment procedure or a connection re-establishment procedure is performed (has been performed) by the terminal apparatus 1.

The PSCell is a serving cell included in a Secondary Cell Group (SCG). The PSCell is a serving cell in which random access is performed by the terminal apparatus 1.

An SCell may be included in either of the MCG or the SCG.

A serving cell group (cell group) is a term at least including an MCG and an SCG. A serving cell group may include one or multiple serving cells (or component carriers). One or multiple serving cells (or component carriers) included in a serving cell group may be operated by means of carrier aggregation.

One or multiple downlink BWPs may be configured for each serving cell (or downlink component carrier). One or multiple uplink BWPs may be configured for each serving cell (or uplink component carrier).

Among one or multiple downlink BWPs configured for a serving cell (or a downlink component carrier), one downlink BWP may be configured as an active downlink BWP (or one downlink BWP may be activated). Among one or multiple uplink BWPs configured for a serving cell (or an uplink component carrier), one uplink BWP may be configured as an active uplink BWP (or one uplink BWP may be activated).

The PDSCH, the PDCCH, and the CSI-RS may be received in an active downlink BWP. The terminal apparatus 1 may attempt to receive the PDSCH, the PDCCH, and the CSI-RS in the active downlink BWP. The PUCCH and the PUSCH may be transmitted in the active uplink BWP. The terminal apparatus 1 may transmit the PUCCH and the PUSCH in the active uplink BWP. The active downlink BWP and the active uplink BWP are also collectively referred to as active BWPs.

The PDSCH, the PDCCH, and the CSI-RS may not be received in downlink BWPs (inactive downlink BWPs) other than active downlink BWPs. The terminal apparatus 1 may not attempt to receive the PDSCH, the PDCCH, and the CSI-RS in downlink BWPs that are not active downlink BWPs. The PUCCH and the PUSCH may not be transmitted in uplink BWPs (inactive uplink BWPs) that are not the active uplink BWPs. The terminal apparatus 1 may not transmit the PUCCH and the PUSCH in uplink BWPs that are not the active uplink BWPs. The inactive downlink BWP and the inactive uplink BWP are also collectively referred to as inactive BWPs.

Downlink BWP switch is a procedure for deactivating one active downlink BWP of a certain serving cell and activating any one of the inactive downlink BWPs of the certain serving cell. The downlink BWP switch may be controlled by a BWP field included in downlink control information. The downlink BWP switch may be controlled based on a higher layer parameter.

Uplink BWP switch is used for deactivating one active uplink BWP and activating any one of the inactive uplink BWPs that are not the one active uplink BWP. The uplink BWP switch may be controlled by a BWP field included in downlink control information. The uplink BWP switch may be controlled based on a higher layer parameter.

Among one or multiple downlink BWPs configured for the serving cell, two or more downlink BWPs may not be configured for the active downlink BWP. For the serving cell, at certain times, one downlink BWP may be active.

Among one or multiple uplink BWPs configured for the serving cell, two or more uplink BWPs may not be configured for the active uplink BWP. For the serving cell, at certain times, one uplink BWP may be active.

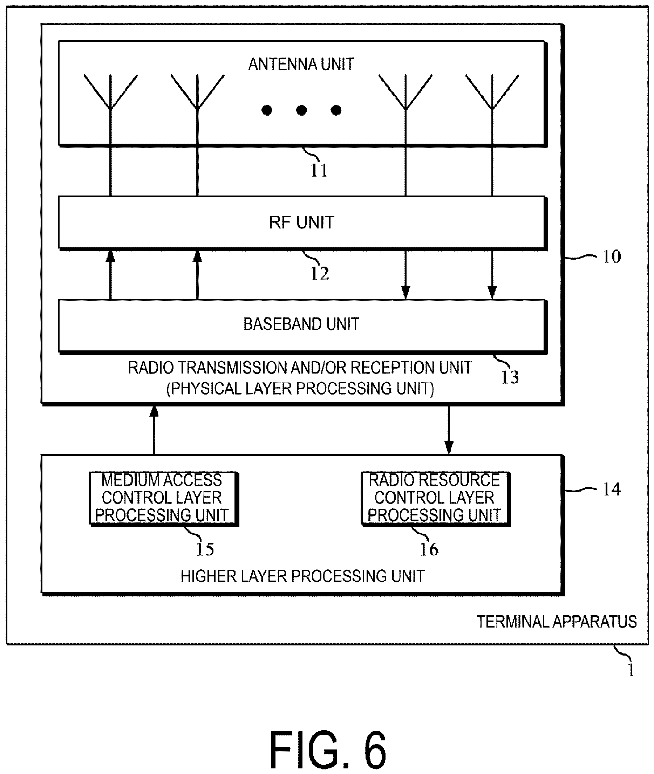

FIG. 6 is a schematic block diagram illustrating a configuration example of the terminal apparatus 1 according to an aspect of the present embodiment. As illustrated in FIG. 6, the terminal apparatus 1 includes at least one or all of a radio transmission and/or reception unit (physical layer processing unit) 10 and a higher layer processing unit 14. The radio transmission and/or reception unit 10 includes at least some or all of an antenna unit 11, an RF unit 12, and a baseband unit 13. The higher layer processing unit 14 includes at least some or all of a medium access control layer processing unit 15 and a radio resource control layer processing unit 16.

The radio transmission and/or reception unit 10 includes at least some or all of a radio transmission unit 10a and a radio reception unit 10b. Here, apparatus configurations of the baseband unit 13 included in the radio transmission unit 10a and the baseband unit 13 included in the radio reception unit 10b may be the same or different from each other. In addition, apparatus configurations of the RF unit 12 included in the radio transmission unit 10a and the RF unit 12 included in the radio reception unit 10b may be the same or different from each other. In addition, apparatus configurations of the antenna unit 11 included in the radio transmission unit 10a and the antenna unit 11 included in the radio reception unit 10b may be the same or different from each other.

For example, the radio transmission unit 10a may generate and transmit a baseband signal of the PRACH. For example, the radio transmission unit 10a may generate and transmit a baseband signal of the PUCCH. The radio transmission unit 10a may generate and transmit a baseband signal of the PUSCH. For example, the radio transmission unit 10a may generate and transmit a baseband signal of the PUCCH DMRS. For example, the radio transmission unit 10a may generate and transmit a baseband signal of the PUSCH DMRS. For example, the radio transmission unit 10a may generate and transmit a baseband signal of the UL PTRS. For example, the radio transmission unit 10a may generate and transmit a baseband signal of the SRS. Generating the baseband signal of the SRS may be generation of an SRS sequence.

For example, the radio reception unit 10b may receive and demodulate the PDSCH. For example, the radio reception unit 10b may receive and demodulate the PDCCH. For example, the radio reception unit 10b may receive and demodulate the PBCH. For example, the radio reception unit 10b may receive a synchronization signal. For example, the radio reception unit 10b may receive the PDSCH DMRS. For example, the radio reception unit 10b may receive the PDCCH DMRS. For example, the radio reception unit 10b may receive the CSI-RS. For example, the radio reception unit 10b may receive the DL PTRS.

The higher layer processing unit 14 outputs uplink data (a transport block) to the radio transmission and/or reception unit 10 (or the radio transmission unit 10a). The higher layer processing unit 14 performs processing of the MAC layer, a packet data convergence protocol layer, a radio link control layer, and the RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets the RRC parameters based on an RRC message received from the base station apparatus 3.

The radio transmission and/or reception unit 10 (or the radio transmission unit 10a) performs processing such as modulation and encoding. The radio transmission and/or reception unit 10 (or the radio transmission unit 10a) generates a physical signal through modulation, encoding, and baseband signal generation (conversion into a time-continuous signal) on uplink data and transmits the physical signal to the base station apparatus 3. The radio transmission and/or reception unit 10 (or the radio transmission unit 10a) may map the physical signal to a certain BWP (an active uplink BWP) and transmit the physical signal to the base station apparatus 3.

The radio transmission and/or reception unit 10 (or the radio reception unit 10b) performs processing such as demodulation and decoding. The radio transmission and/or reception unit 10 (or the radio reception unit 30b) may receive a physical signal in a certain BWP (active downlink BWP) of a certain serving cell. The radio transmission and/or reception unit 10 (or the radio reception unit 10b) separates, demodulates, and decodes the received physical signal and outputs the decoded information to the higher layer processing unit 14. The radio transmission and/or reception unit 10 (radio reception unit 10b) may perform the channel access procedure prior to the transmission of the physical signal.

The RF unit 12 converts (down-converts) a signal received via the antenna unit 11 into a baseband signal by means of quadrature demodulation and removes unnecessary frequency components. The RF unit 12 outputs a processed analog signal to the baseband unit 13.

The baseband unit 13 converts the analog signal input from the RF unit 12 into a digital signal. The baseband unit 13 removes a portion corresponding to the Cyclic Prefix (CP) from the converted digital signal, performs a Fast Fourier Transform (FFT) on the signal from which the CP has been removed, and extracts a signal in the frequency domain.

The baseband unit 13 performs Inverse Fast Fourier Transform (IFFT) on the uplink data to generate an OFDM symbol, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 through a low-pass filter, up-converts the analog signal into a signal having a carrier frequency, and transmits the signal via the antenna unit 11. In addition, the RF unit 12 may have a function of controlling transmission power. The RF unit 12 is also referred to as a transmission power control unit.

A physical signal (signal) will be described below.

A physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal.

The uplink physical channel may correspond to a set of resource elements for conveying information that is generated in a Higher layer. The uplink physical channel may be a physical channel used in the uplink component carrier. The uplink physical channel may be transmitted by the terminal apparatus 1. The uplink physical channel may be received by the base station apparatus 3. In the radio communication system according to an aspect of the present embodiment, at least some or all of the following uplink physical channels may be used:
- Physical Uplink Control CHannel (PUCCH);
- Physical Uplink Shared CHannel (PUSCH); and
- Physical Random Access CHannel (PRACH).

The PUCCH may be used to transmit Uplink Control Information (UCI). The PUCCH may be transmitted for conveying (delivering or transmitting) uplink control information. Uplink control information may be mapped to the PUCCH. The terminal apparatus 1 may transmit the PUCCH to which the uplink control information is mapped. The base station apparatus 3 may receive the PUCCH to which the uplink control information is mapped.

The uplink control information (uplink control information bit, uplink control information sequence, or uplink control information type) includes at least a some or all of Channel State Information (CSI), a Scheduling Request (SR), and Hybrid Automatic Repeat request ACKnowledgement (HARQ-ACK) information.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include at least a HARQ-ACK corresponding to a Transport block (TB). The HARQ-ACK may indicate an acknowledgement (ACK) or a negative-acknowledgement (NACK) corresponding to the transport block. The ACK may indicate that decoding of a transport block has been decoded successfully. The NACK may indicate that decoding of the transport block has not been decoded successfully. The HARQ-ACK information may include a HARQ-ACK codebook including one or multiple HARQ-ACK bits.

A transport block is a sequence of information bits delivered from a higher layer. Here, the sequence of information bits is also referred to as a bit sequence. Here, the transport block may be delivered through an UpLink-Shared CHannel (UL-SCH) of a Transport layer.

A HARQ-ACK for a transport block may be referred to as a HARQ-ACK for the PDSCH. In this case, the "HARQ-ACK for the PDSCH" indicates the HARQ-ACK for the transport block included in the PDSCH.

The HARQ-ACK may indicate an ACK or a NACK corresponding to one Code Block Group (CBG) included in the transport block.

The scheduling request may be at least used for requesting a resource of the UL-SCH for new transmission. The scheduling request bit may be used for indicating either of a positive SR or a negative SR. The scheduling request bit indicating a positive SR is also referred to as "a positive SR being conveyed". The positive SR may indicate that the terminal apparatus 1 requests resources of the UL-SCH for new transmission. The positive SR may indicate that a scheduling request is triggered by a higher layer. The positive SR may be conveyed in a case that the higher layer indicates the scheduling request. The scheduling request bit indicating a negative SR is also referred to as "a negative SR being transmitted". The negative SR may indicate that the terminal apparatus 1 requests no resources of the UL-SCH for new transmission. The negative SR may indicate that the scheduling request is not triggered by the higher layer. The negative SR may be conveyed in a case that the higher layer indicates no scheduling request.

Channel state information may include at least some or all of a Channel Quality Indicator (CQI), a Precoder Matrix Indicator (PMI), and a Rank Indicator (RI). The CQI is an indicator related to the quality of a propagation path (for example, propagation strength) or the quality of a physical channel, and the PMI is an indicator related to a precoder. The RI is an indicator related to a transmission rank (or the number of transmission layers).

The channel state information is an indicator related to a reception state of a physical signal (for example, CSI-RS) at least used for channel measurement. A value of the channel state information may be determined by the terminal apparatus 1 based on the reception state assumed by the physical signal at least used for channel measurement. Channel measurement may include interference measurement.

The PUCCH may correspond to a PUCCH format. The PUCCH may be a set of resource elements used for conveying the PUCCH format. The PUCCH may include the PUCCH format. The PUCCH may be transmitted with a certain PUCCH format. Note that the PUCCH format may be interpreted as a form of information. In addition, the PUCCH format may be interpreted as a set of information set in a certain form of information.

The PUSCH may be used for conveying one or both of a transport block and uplink control information. The transport block may be mapped to the PUSCH. The transport block delivered by the UL-SCH may be mapped to the PUSCH. The uplink control information may be mapped to the PUSCH. The terminal apparatus 1 may transmit the PUSCH to which one or both of the transport block and the uplink control information are mapped. The base station apparatus 3 may receive the PUSCH to which one or both of the transport block and the uplink control information are mapped.

The PRACH may be transmitted for conveying a random access preamble. The terminal apparatus 1 may transmit the PRACH. The base station apparatus 3 may receive the PRACH. A PRACH sequence x_{u, v}(n) is defined by x_{u, v}(n) = xᵤ(mod(n + Cᵥ, L_{RA})). Here, xᵤ is a Zadoff Chu (ZC) sequence. In addition, xᵤ may be defined by xᵤ = exp(-jπui(i + 1)/L_{RA}). j is an imaginary unit. In addition, π is the ratio of the circumference of a circle to its diameter. In addition, Cᵥ corresponds to a cyclic shift of the PRACH sequence. In addition, L_{RA} corresponds to the length of the PRACH sequence. In addition, L_{RA} is 839 or 139. In addition, i is an integer in the range from 0 to L_{RA} - 1. In addition, u is a sequence index for the PRACH sequence.

For each PRACH occasion, 64 random access preambles are defined. The random access preambles are identified based on the cyclic shift Cᵥ of the PRACH sequence and the sequence index u for the PRACH sequence. Each of the 64 identified random access preambles may be assigned an index.

The uplink physical signal may correspond to a set of resource elements. The uplink physical signal may not be used to convey information generated in a higher layer. Note that the uplink physical signal may be used to convey information generated in the physical layer. The uplink physical signal may be a physical signal used in an uplink component carrier. The terminal apparatus 1 may transmit the uplink physical signal. The base station apparatus 3 may receive the uplink physical signal. In the radio communication system according to an aspect of the present embodiment, at least some or all of the following uplink physical signals may be used:
- UpLink Demodulation Reference Signal (UL DMRS);
- Sounding Reference Signal (SRS); and
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, or DMRS corresponding to the PUSCH) may be given based on a set of antenna ports for the PUSCH. For example, the set of antenna ports of the DMRS for the PUSCH may be the same as a set of antenna ports of the PUSCH.

Transmission of the PUSCH and transmission of the DMRS for the PUSCH may be indicated (or may be scheduled) in one DCI format. The PUSCH and the DMRS for the PUSCH may be collectively referred to as a PUSCH. Transmission of the PUSCH may mean transmission of the PUSCH and the DMRS for the PUSCH.

A propagation path of the PUSCH may be inferred from the DMRS for the PUSCH.

A set of antenna ports of the DMRS for the PUCCH (DMRS related to the PUCCH, DMRS included in the PUCCH, or DMRS corresponding to the PUCCH) may be the same as a set of antenna ports of the PUCCH.

Transmission of the PUCCH and transmission of the DMRS for the PUCCH may be indicated (or may be triggered) in one DCI format. One or both of resource element mapping of the PUCCH and resource element mapping of the DMRS for the PUCCH may be given in one PUCCH format. The PUCCH and the DMRS for the PUCCH may be collectively referred to as a PUCCH. Transmission of the PUCCH may mean transmission of the PUCCH and the DMRS for the PUCCH.

A propagation path of the PUCCH may be inferred from the DMRS for the PUCCH.

The downlink physical channel may correspond to a set of resource elements for conveying information generated in a higher layer. The downlink physical channel may be a physical channel used in a downlink component carrier. The base station apparatus 3 may transmit the downlink physical channel. The terminal apparatus 1 may receive the downlink physical channel. In the radio communication system according to an aspect of the present embodiment, at least some or all of the following downlink physical channels may be used:
- Physical Broadcast Channel (PBCH);
- Physical Downlink Control Channel (PDCCH); and
- Physical Downlink Shared Channel (PDSCH).

The PBCH may be transmitted for conveying one or both of a Master Information Block (MIB) and physical layer control information. Here, the physical layer control information is information generated in the physical layer. The MIB is a set of parameters mapped to a Broadcast Control CHannel (BCCH) that is a logical channel of the MAC layer. The BCCH is mapped to the BCH that is a channel of the transport layer. The BCH may be mapped to the PBCH. The terminal apparatus 1 may receive the PBCH to which one or both of the MIB and the physical layer control information are mapped. The base station apparatus 3 may transmit the PBCH to which one or both of the MIB and/or the physical layer control information are mapped.

For example, the physical layer control information may be configured with 8 bits. The physical layer control information may include at least some or all of the following 0A to 0D:
0A) Radio frame bit;
0B) Half radio frame (half system frame, half frame) bit;
0C) SS/PBCH block index bit; and
0D) Subcarrier offset bit.

The radio frame bit is used for indicating a radio frame in which the PBCH is transmitted (radio frame including a slot in which the PBCH is transmitted). The radio frame bit includes 4 bits. The radio frame bit may be configured with 4 bits out of a 10-bit radio frame indicator. For example, the radio frame indicator may be at least used for identifying radio frames from index 0 to index 1023.

The half radio frame bit is used for indicating, out of the radio frame in which the PBCH is transmitted, which of the first five subframes or the last five subframes is used for transmission of the PBCH. Here, the half radio frame may include five subframes. In addition, the half radio frame may include the first five subframes out of the 10 subframes included in the radio frame. In addition, the half radio frame may include the last five subframes out of the 10 subframes included in the radio frame.

The SS/PBCH block index bit is used for indicating an SS/PBCH block index. The SS/PBCH block index bit includes 3 bits. The SS/PBCH block index bit may include 3 bits out of a 6-bit SS/PBCH block index indicator. The SS/PBCH block index indicator may be at least used for identifying SS/PBCH blocks from index 0 to index 63. The SS/PBCH block may also be referred to as an SSB.

A subcarrier offset bit is used for indicating a subcarrier offset. The subcarrier offset may be used for indicating a difference between the first subcarrier to which the PBCH is mapped and the first subcarrier to which the control resource set having the index 0 is mapped.

The PDCCH may be used for conveying Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may also be interpreted as a format of downlink control information. In addition, the DCI format may be interpreted as a set of downlink control information set in a certain format of downlink control information.

A DCI format 0_0, a DCI format 0_1, a DCI format 1_0, and a DCI format 1_1 are DCI formats. An uplink DCI format is a general term for the DCI format 0_0 and the DCI format 0_1. A downlink DCI format is a general term for the DCI format 1_0 and the DCI format 1_1.

The DCI format 0_0 is at least used for scheduling of the PUSCH mapped to a certain cell. The DCI format 0_0 includes at least some or all of the fields listed from 1A to 1E:
1A) Identifier field for DCI formats;
1B) Frequency domain resource assignment field;
1C) Time domain resource assignment field;
1D) Frequency hopping flag field; and
1E) Modulation and Coding Scheme (MCS) field.

The identifier field for DCI formats may indicate whether the DCI format including the identifier field for DCI formats is an uplink DCI format or a downlink DCI format. In other words, each of the uplink DCI format and the downlink DCI format may include the identifier field for DCI formats. Here, the identifier field for DCI formats included in the DCI format 0_0 may indicate 0.

A frequency domain resource assignment field included in the DCI format 0_0 may be used for indicating assignment of frequency resources for the PUSCH.

A time domain resource assignment field included in the DCI format 0_0 may be used for indicating assignment of time resources for the PUSCH.

A frequency hopping flag field may be used for indicating whether frequency hopping is applied to the PUSCH.

An MCS field included in the DCI format 0_0 may be at least used for indicating one or both of a modulation scheme for the PUSCH and a target encoding rate. The target encoding rate may be a target encoding rate for the transport block mapped to the PUSCH. The Transport Block Size (TBS) of the PUSCH mapped to the PUSCH may be determined based on one or both of the target encoding rate and the modulation scheme for the PUSCH.

The DCI format 0_0 may not include a field used for a CSI request.

The DCI format 0_0 may not include a carrier indicator field. In other words, for the uplink component carrier to which the PUSCH scheduled in the DCI format 0_0 is mapped, the serving cell to which this uplink component carrier belongs may be the same as the serving cell of the uplink component carrier to which the PDCCH including the DCI format 0_0 is mapped. Based on detection of the DCI format 0_0 in a certain downlink component carrier of a certain serving cell, the terminal apparatus 1 may recognize that the PUSCH scheduled in the DCI format 0_0 is mapped to the uplink component carrier of the certain serving cell.

The DCI format 0_0 may not include the BWP field. Here, the DCI format 0_0 may be a DCI format for scheduling the PUSCH without changing an active uplink BWP. The terminal apparatus 1 may recognize that the PUSCH is transmitted without switching the active uplink BWP based on detection of the DCI format 0_0 used for the scheduling of the PUSCH.

The DCI format 0_1 is at least used for scheduling of the PUSCH mapped to a certain cell. The DCI format 0_1 includes at least some or all of the fields listed from 2A to 2H:
2A) Identifier field for DCI formats;
2B) Frequency domain resource assignment field;
2C) Uplink time domain resource assignment field;
2D) Frequency hopping flag field;
2E) MCS field;
2F) CSI request field;
2G) BWP field; and
2H) Carrier indicator field.

The identifier field for DCI formats included in the DCI format 0_1 may indicate 0.

The frequency domain resource assignment field included in the DCI format 0_1 may be used for indicating assignment of frequency resources for the PUSCH.

The time domain resource assignment field included in the DCI format 0_1 may be used for indicating assignment of time resources for the PUSCH.

The MCS field included in the DCI format 0_1 may be at least used for indicating some or all of a modulation scheme for the PUSCH and/or a target encoding rate.

The BWP field of the DCI format 0_1 may be used for indicating an uplink BWP to which the PUSCH scheduled in the DCI format 0_1 is mapped. In other words, the DCI format 0_1 may be accompanied by a change in the active uplink BWP. The terminal apparatus 1 may recognize the uplink BWP to which the PUSCH is mapped based on detection of the DCI format 0_1 used for scheduling of the PUSCH.

The DCI format 0_1 not including the BWP field may be a DCI format for scheduling the PUSCH without changing the active uplink BWP. The terminal apparatus 1 may recognize that the PUSCH is transmitted without switching the active uplink BWP based on detection of the DCI format D0_1 which is the DCI format 0_1 used for the scheduling of the PUSCH and does not include the BWP field.

In a case that the BWP field is included in the DCI format 0_1 but the terminal apparatus 1 does not support the function of switching the BWP according to the DCI format 0_1, the terminal apparatus 1 may ignore the BWP field. In other words, the terminal apparatus 1 which does not support the function of switching the BWP may recognize that the PUSCH is transmitted without switching the active uplink BWP based on detection of the DCI format 0_1 which is the DCI format 0_1 used for the scheduling of the PUSCH and includes the BWP field. Here, in a case that the terminal apparatus 1 supports the function of switching the BWP, the terminal apparatus 1 may report, in a function information reporting procedure of the RRC layer, that "the terminal apparatus 1 supports the function of switching the BWP".

The CSI request field is used for indicating reporting of the CSI.

In a case that the carrier indicator field is included in the DCI format 0_1, the carrier indicator field may be used for indicating the uplink component carrier to which the PUSCH is mapped. In a case that the carrier indicator field is not included in the DCI format 0_1, the uplink component carrier to which the PUSCH is mapped may be the same as the uplink component carrier to which the PDCCH including the DCI format 0_1 used for scheduling of the PUSCH is mapped. In a case that the number of uplink component carriers configured for the terminal apparatus 1 in a certain serving cell group is two or more (in a case that uplink carrier aggregation is operated in a certain serving cell group), the number of bits of the carrier indicator field included in the DCI format 0_1 used for scheduling of the PUSCH mapped to the certain serving cell group may be 1 bit or more (for example, 3 bits). In a case that the number of uplink component carriers configured for the terminal apparatus 1 in a certain serving cell group is 1 (in a case that uplink carrier aggregation is not operated in a certain serving cell group), the number of bits of the carrier indicator field included in the DCI format 0_1 used for scheduling of the PUSCH mapped to the certain serving cell group may be 0 bits (or the carrier indicator field may not be included in the DCI format 0_1 used for scheduling of the PUSCH mapped to the certain serving cell group).

The DCI format 1_0 is at least used for scheduling of the PDSCH mapped to a certain cell. The DCI format 1_0 includes at least some or all of 3A to 3F:
3A) Identifier field for DCI formats;
3B) Frequency domain resource assignment field;
3C) Time domain resource assignment field;
3D) MCS field;
3E) PDSCH_HARQ feedback timing indicator field (PDSCH to HARQ feedback timing indicator field); and
3F) PUCCH resource indicator field.

The identifier field for DCI formats included in the DCI format 1_0 may indicate 1.

The frequency domain resource assignment field included in the DCI format 1_0 may be at least used for indicating assignment of frequency resources for the PDSCH.

The time domain resource assignment field included in the DCI format 1_0 may be at least used for indicating assignment of time resources for the PDSCH.

The MCS field included in the DCI format 1_0 may be at least used for indicating one or both of the modulation scheme for the PDSCH and the target encoding rate. The target encoding rate may be a target encoding rate for the transport block mapped to the PDSCH. The Transport Block Size (TBS) mapped to the PDSCH may be determined based on one or both of the target encoding rate and the modulation scheme for the PDSCH.

The PDSCH _HARQ feedback timing indicator field may be used for indicating an offset from the slot including the last OFDM symbol of the PDSCH to the slot including the first OFDM symbol of the PUCCH.

The PUCCH resource indicator field may be a field indicating an index of any of one or multiple PUCCH resources included in a PUCCH resource set. The PUCCH resource set may include one or multiple PUCCH resources.

The DCI format 1_0 may not include the carrier indicator field. In other words, the downlink component carrier to which the PDSCH scheduled in the DCI format 1_0 is mapped may be the same as the downlink component carrier to which the PDCCH including the DCI format 1_0 is mapped. Based on detection of the DCI format 1_0 in a certain downlink component carrier, the terminal apparatus 1 may recognize that the PDSCH scheduled in the DCI format 1_0 is mapped to the downlink component carrier.

The DCI format 1_0 may not include the BWP field. Here, DCI format 1_0 may be a DCI format for scheduling the PDSCH without changing the active downlink BWP. The terminal apparatus 1 may recognize that the PDSCH is received without switching the active downlink BWP based on detection of the DCI format 1_0 used in the scheduling of the PDSCH.

The DCI format 1_1 is at least used for scheduling of the PDSCH mapped to a certain cell. The DCI format 1_1 includes at least some or all of 4A to 4I:
4A) Identifier field for DCI formats;
4B) Frequency domain resource assignment field;
4C) Time domain resource assignment field;
4E) MCS field;
4F) PDSCH_HARQ feedback timing indicator field;
4G) PUCCH resource indicator field;
4H) BWP field; and
4I) Carrier indicator field.

The identifier field for DCI formats included in the DCI format 1_1 may indicate 1.

The frequency domain resource assignment field included in the DCI format 1_1 may be at least used for indicating assignment of frequency resources for the PDSCH.

The time domain resource assignment field included in the DCI format 1_1 may be at least used for indicating assignment of time resources for the PDSCH.

The MCS field included in the DCI format 1_1 may be at least used for indicating one or both of the modulation scheme for the PDSCH and the target encoding rate.

In a case that the PDSCH_HARQ feedback timing indicator field is included in the DCI format 1_1, the PDSCH_HARQ feedback timing indicator field may be at least used for indicating an offset from the slot including the last OFDM symbol of the PDSCH to the slot including the first OFDM symbol of the PUCCH. In a case that the PDSCH_HARQ feedback timing indicator field is not included in the DCI format 1_1, an offset from the slot including the last OFDM symbol of the PDSCH to the slot including the first OFDM symbol of the PUCCH may be identified by a higher layer parameter.

The PUCCH resource indicator field may be a field indicating an index of any of one or multiple PUCCH resources included in a PUCCH resource set.

The BWP field of the DCI format 1_1 may be used to indicate the downlink BWP to which the PDSCH scheduled by the DCI format 1_1 is mapped. In other words, the DCI format 1_1 may be accompanied by a change in the active downlink BWP. The terminal apparatus 1 may recognize the downlink BWP to which the PUSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is the DCI format 1_1 used for the scheduling of the PDSCH and does not include the BWP field.

In a case that the DCI format 1_1 includes the BWP field but the terminal apparatus 1 does not support the function of switching the BWP according to the DCI format 1_1, the terminal apparatus 1 may ignore the BWP field. In other words, the terminal apparatus 1 which does not support the function of switching the BWP may recognize that the PDSCH is received without switching the active downlink BWP based on detection of the DCI format 1_1 which is the DCI format 1_1 used for the scheduling of the PDSCH and includes the BWP field. Here, in a case that the terminal apparatus 1 supports the function of switching the BWP, the terminal apparatus 1 may report, in a function information reporting procedure of the RRC layer, that "the terminal apparatus 1 supports the function of switching the BWP".

In a case that the carrier indicator field is included in the DCI format 1_1, the carrier indicator field may be used for indicating the downlink component carrier to which the PDSCH is mapped. In a case that the carrier indicator field is not included in the DCI format 1_1, the downlink component carrier to which the PDSCH is mapped may be the same as the downlink component carrier to which the PDCCH including the DCI format 1_1 used for scheduling of the PDSCH is mapped. In a case that the number of downlink component carriers configured for the terminal apparatus 1 in a certain serving cell group is two or more (in a case that downlink carrier aggregation is operated in a certain serving cell group), the number of bits of the carrier indicator field included in the DCI format 1_1 used for scheduling of the PDSCH mapped to the certain serving cell group may be 1 bit or more (for example, 3 bits). In a case that the number of downlink component carriers configured for the terminal apparatus 1 in a certain serving cell group is one (in a case that downlink carrier aggregation is not operated in a certain serving cell group), the number of bits of the carrier indicator field included in the DCI format 1_1 used for scheduling of the PDSCH mapped to the certain serving cell group may be 0 bits (or the carrier indicator field may not be included in the DCI format 1_1 used for scheduling of the PDSCH mapped to the certain serving cell group).

The PDSCH may be transmitted for conveying transport blocks. The PDSCH may be used for transmitting transport blocks delivered by the DL-SCH. The PDSCH may be used for conveying transport blocks. The transport blocks may be mapped to the PDSCH. The transport blocks corresponding to the DL-SCH may be mapped to the PDSCH. The base station apparatus 3 may transmit the PDSCH. The terminal apparatus 1 may receive the PDSCH.

The downlink physical signal may correspond to a set of resource elements. The downlink physical signal may not carry information generated in a higher layer. The downlink physical signal may be a physical signal used in the downlink component carrier. The downlink physical signal may be transmitted by the base station apparatus 3. The downlink physical signal may be transmitted by the terminal apparatus 1. In the radio communication system according to an aspect of the present embodiment, at least some or all of the following downlink physical signals may be used:
- Synchronization signal (SS);
- DownLink DeModulation Reference Signal (DL DMRS);
- Channel State Information-Reference Signal (CSI-RS); and
- DownLink Phase Tracking Reference Signal (DL PTRS).

The synchronization signal may be used for the terminal apparatus 1 to take synchronization in one or both of the frequency domain and the time domain in downlink. The synchronization signal is a general term for Primary Synchronization Signal (PSS) and Secondary Synchronization Signal (SSS).

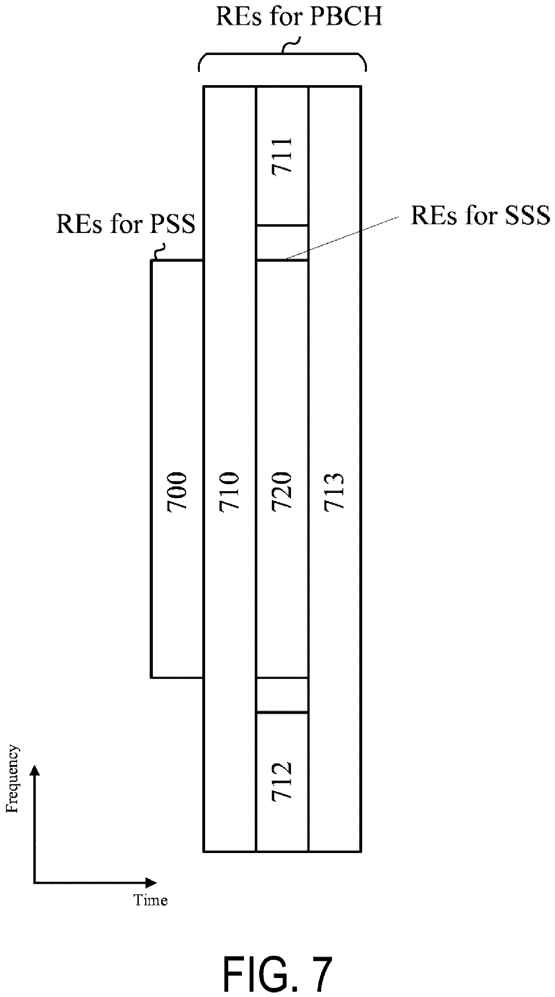

FIG. 7 is a diagram illustrating a configuration example of the SS/PBCH block according to an aspect of the present embodiment. In FIG. 7, the horizontal axis represents time axis (OFDM symbol index l_{sym}), and the vertical axis represents frequency domain. In addition, a block 700 represents a set of resource elements for the PSS. In addition, a block 720 represents a set of resource elements for the SSS. In addition, four blocks (blocks 710, 711, 712, and 713) represent a set of resource elements for the PBCH and the DMRS for the PBCH (DMRS related to the PBCH, DMRS included in the PBCH, or DMRS corresponding to the PBCH).

As illustrated in FIG. 7, the SS/PBCH block includes the PSS, the SSS, and the PBCH. In addition, the SS/PBCH block includes four consecutive OFDM symbols. The SS/PBCH block includes 240 subcarriers. The PSS is mapped to the 57th to 183rd subcarriers in the first OFDM symbol. The SSS is mapped to the 57th to 183rd subcarriers in the third OFDM symbol. Zero may be set to the 1st to 56th subcarriers of the first OFDM symbol. Zero may be set to the 184th to 240th subcarriers of the first OFDM symbol. Zero may be set to the 49th to 56th subcarriers of the third OFDM symbol. Zero may be set to the 184th to 192nd subcarriers of the third OFDM symbol. The PBCH is mapped to subcarriers which are the 1st to 240th subcarriers of the second OFDM symbol and to which the DMRS for the PBCH is not mapped. The PBCH is mapped to subcarriers which are the 1st to 48th subcarriers of the third OFDM symbol and to which the DMRS for the PBCH is not mapped. The PBCH is mapped to subcarriers which are the 193rd to 240th subcarriers of the third OFDM symbol and to which the DMRS for the PBCH is not mapped. The PBCH is mapped to subcarriers which are the 1st to 240th subcarriers of the fourth OFDM symbol and to which the DMRS for the PBCH is not mapped.

The PSS, the SSS, the PBCH, and the antenna port of the DMRS for the PBCH may be the same.

The PBCH over which the symbol of the PBCH on a certain antenna port is conveyed may be inferred from the DMRS for the PBCH mapped to the slot to which the PBCH is mapped and the DMRS for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, or DMRS corresponding to the PDSCH) may be given based on a set of antenna ports for the PDSCH. In other words, the set of antenna ports of the DMRS for the PDSCH may be the same as the set of antenna ports for the PDSCH.

Transmission of the PDSCH and transmission of the DMRS for the PDSCH may be indicated (or may be scheduled) in one DCI format. The PDSCH and the DMRS for the PDSCH may be collectively referred to as a PDSCH. Transmission of the PDSCH may be transmission of the PDSCH and the DMRS for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH over which the symbol of the PDSCH on a certain antenna port is conveyed may be inferred from the DMRS for the PDSCH.

The antenna port of the DMRS for the PDCCH (DMRS related to the PDCCH, DMRS included in the PDCCH, or DMRS corresponding to the PDCCH) may be the same as the antenna port for the PDCCH.

The PDCCH may be inferred from the DMRS for the PDCCH. In other words, a propagation path of the PDCCH may be inferred from the DMRS for the PDCCH. In a case that the same precoder is (assumed to be) applied to a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels. A transport channel defines the relationship between a physical layer channel and a MAC layer channel (also referred to as a logical channel).

The BCH of the transport layer is mapped to the PBCH of the physical layer. In other words, a transport block passing through the BCH of the transport layer is delivered to the PBCH of the physical layer. In addition, the UL-SCH of the transport layer is mapped to the PUSCH of the physical layer. In other words, the transport block passing through the UL-SCH of the transport layer is delivered to the PUSCH of the physical layer. In addition, the DL-SCH of the transport layer is mapped to the PDSCH of the physical layer. In other words, a transport block passing through the DL-SCH of the transport layer is delivered to the PDSCH of the physical layer.

One UL-SCH and one DL-SCH may be given to each serving cell. The BCH may be given to a PCell. The BCH may not be given to a PSCell and an SCell.

The MAC layer controls the Hybrid Automatic Repeat reQuest (HARQ) for each transport block.

A Broadcast Control CHannel (BCCH), a Common Control CHannel (CCCH), and a Dedicated Control CHannel (DCCH) are logical channels. For example, the BCCH is a channel of the RRC layer used for transmitting the MIB or system information. In addition, the Common Control CHannel (CCCH) may be used for transmitting a common RRC message in multiple terminal apparatuses 1. Here, the CCCH may be, for example, used for the terminal apparatus 1 that is not RRC-connected. In addition, the Dedicated Control CHannel (DCCH) may be at least used for transmitting an RRC message dedicated to the terminal apparatus 1. Here, the DCCH may be, for example, used for the terminal apparatus 1 that is RRC-connected.

For example, System Information (SI) may be configured with the MIB and several System Information blocks (SIBs). In addition, the system information may be divided into Minimum SI and Other SI. The Minimum SI may include basic information required for initial access. Further, the Minimum SI may include information for acquiring the Other SI. The Minimum SI may include an MIB and a SIB1. The Other SI may include all SIBs that are not broadcast in the Minimum SI. These SIBs may be broadcast or transmitted in the DL-SCH.

The SIB1 may define scheduling of Other SI. The SIB1 may include information needed for initial access. The SIB1 may be referred to as a Remaining Minimum SI (RMSI). The SIB1 may be left periodically on the DL-SCH. The SIB1 may be transmitted in a dedicated manner on the DL-SCH to some pieces of UE in an RRC_CONNECTED state.

A higher layer parameter common to multiple terminal apparatuses 1 is also referred to as a common higher layer parameter. Here, the common higher layer parameter may be defined as a parameter specific to the serving cell. Here, the parameter specific to the serving cell may be a parameter common to terminal apparatuses configured with the serving cell (for example, the terminal apparatuses 1-A, 1-B, and 1-C).

For example, an RRC message delivered to the BCCH may include the common higher layer parameter. For example, an RRC message delivered on the DCCH may include the common higher layer parameter.

Among certain higher layer parameters, a higher layer parameter different from the common higher layer parameter is also referred to as a dedicated higher layer parameter. Here, the dedicated higher layer parameter can provide a dedicated RRC parameter to the terminal apparatus 1-A configured with the serving cell. In other words, the dedicated RRC parameter is a higher layer parameter capable of providing a unique configuration to each of the terminal apparatuses 1-A, 1-B, and 1-C.

The BCCH of the logical channel may be mapped to the BCH or the DL-SCH of the transport layer. For example, a transport block including information of an MIB is delivered to the BCH of the transport layer. In addition, a transport block including system information other than the MIB is delivered to the DL-SCH of the transport layer. In addition, the CCCH is mapped to the DL-SCH or the UL-SCH. In other words, a transport block mapped to the CCCH is delivered to the DL-SCH or the UL-SCH. In addition, the DCCH is mapped to the DL-SCH or the UL-SCH. In other words, a transport block mapped to the DCCH is delivered to the DL-SCH or the UL-SCH.

The RRC message includes one or multiple parameters managed in the RRC layer. Here, the parameters managed in the RRC layer are also referred to as RRC parameters. For example, the RRC message may include the MIB. In addition, the RRC message may include system information. In addition, the RRC message may include a message corresponding to the CCCH. In addition, the RRC message may include a message corresponding to the DCCH. The RRC message including a message corresponding to the DCCH is also referred to as an individual RRC message.

The higher layer parameter is an RRC parameter or a parameter included in a Medium Access Control Control Element (MAC CE). In other words, the higher layer parameter is a general term for the MIB, the system information, a message corresponding to the CCCH, a message corresponding to the DCCH, and the parameter included in the MAC CE. The parameter included in the MAC CE is transmitted according to a MAC Control Element (CE) command.

Procedures performed by the terminal apparatus 1 include at least some or all of the following 5A to 5C:
5A) Cell search;
5B) Random access; and
5C) Data communication.

Cell search is a procedure used for the terminal apparatus 1 to take synchronization with a certain cell related to the time domain and the frequency domain and detect a physical cell identity (ID). In other words, by means of cell search, the terminal apparatus 1 may perform synchronization with a certain cell in the time domain and the frequency domain and detect a physical cell ID.

A sequence of the PSS is given based at least on the physical cell ID. A sequence of the SSS is given based at least on the physical cell ID.

An SS/PBCH block candidate indicates a resource allowed to (possible to, scheduled to, configured to, defined to, or having a possibility to) transmit the SS/PBCH block.

A set of SS/PBCH block candidates in a certain half radio frame is also referred to as an SS burst set. The SS burst set is also referred to as a transmission window (transmissionwindow), an SS transmission window, or a Discovery Reference Signal transmission window (DRS transmission window). The SS burst set is a general term including at least a first SS burst set and a second SS burst set.

The base station apparatus 3 transmits SS/PBCH blocks with one or multiple indices having a prescribed periodicity. The terminal apparatus 1 may detect at least one SS/PBCH block out of the SS/PBCH blocks with one or multiple indices and attempt decoding of the PBCH included in the SS/PBCH block.

Random access is a procedure including at least some or all of a message 1, a message 2, a message 3, and a message 4.

The message 1 is a procedure of the terminal apparatus 1 to transmit the PRACH. The terminal apparatus 1 transmits the PRACH in one PRACH occasion selected from one or multiple PRACH occasions based at least on the index of the SS/PBCH block candidate detected based on the cell search. Each of the PRACH occasions is defined based at least on resources in the time domain and the frequency domain.

The terminal apparatus 1 transmits one random access preamble selected from the PRACH occasions corresponding to the indices of the SS/PBCH block candidates in which the SS/PBCH block is detected.

The message 2 is a procedure of the terminal apparatus 1 to attempt to detect a DCI format 1_0 with Cyclic Redundancy Check (CRC) scrambled by a Random Access-Radio Network Temporary Identifier (RA-RNTI). The terminal apparatus 1 attempts detection of the PDCCH including the DCI format in a control resource set given based on the MIB, which is included in the PBCH included in the SS/PBCH block detected based on cell search, and in resources indicated based on a configuration of a search space set. The message 2 is also referred to as a random access response.

The message 3 is a procedure for transmitting the PUSCH scheduled by using a random access response grant included in the DCI format 1_0 detected through the procedure of the message 2. Here, the random access response grant (random access responsegrant) is indicated by the MAC CE included in the PDSCH scheduled by using the DCI format 1_0.

The PUSCH scheduled based on the random access response grant is either a message 3 PUSCH or a PUSCH. The message 3 PUSCH includes a contention resolution identifier (ID) MAC CE. The contention resolution ID MAC CE includes a contention resolution ID.

Retransmission of the message 3 PUSCH is scheduled by using a DCI format 0_0 with a CRC scrambled based on a Temporary Cell-Radio Network Temporary Identifier (TC-RNTI).

The message 4 is a procedure for attempting to detect a DCI format 1_0 with a CRC scrambled based on either of a Cell-Radio Network Temporary Identifier (C-RNTI) or a TC-RNTI. The terminal apparatus 1 receives a PDSCH scheduled based on the DCI format 1_0. The PDSCH may include a contention resolution ID.

Data communication is a general term for downlink communication and uplink communication.

In the data communication, the terminal apparatus 1 attempts detection of the PDCCH (monitors the PDCCH or supervises the PDCCH) in resources identified based on a control resource set and a search space set.

The control resource set is a set of resources including a certain number of resource blocks and a certain number of OFDM symbols. In the frequency domain, the control resource set may include continuous resources (non-interleaved mapping) or may include distributed resources (interleaver mapping).

A set of resource blocks constituting the control resource set may be indicated by a higher layer parameter. The number of OFDM symbols constituting the control resource set may be indicated by the higher layer parameter.

One Control Resource Set (CORESET) pool index may be provided for one or multiple CORESETs. For example, a CORESET pool index may be provided by a higher layer parameter. For example, in a case that no CORESET pool index is provided by a higher layer parameter, the CORESET pool index may be 0. A value of a CORESET pool index may be 0 or 1. A CORESET pool index may be referred to as an index of a CORESET resource pool. For example, a CORESET pool index may be provided in one active downlink BWP of one serving cell. For example, a CORESET pool index having the value 0 may be provided for the first multiple CORESETs.

The terminal apparatus 1 may apply a first procedure for reporting HARQ-ACK information related to the first CORESETs and a second procedure for reporting HARQ-ACK information related to the second CORESETs. The terminal apparatus 1 may apply the first procedure and the second procedure separately. The first CORESETs and the second CORESETs may be CORESETs in an active downlink BWP of one serving cell. The CORESET pool index having the value 0 may be provided for the first CORESETs. The CORESET pool index having the value 1 may be provided for the second CORESETs. The first CORESETs may be a first one or multiple CORESETs. The second CORESETs may be a second one or multiple CORESETs.

The Transmission Configuration Indication state (TCI state) may be provided by a DCI format. The configuration (or list of configurations) of one or multiple TCI states may be provided by higher layer parameters for decoding the PDSCH. For example, the terminal apparatus 1 may decode the PDSCH in accordance with the decoded PDCCH. One TCI state may include a parameter for configuring a QCL relationship between a downlink reference signal and a first antenna port. For example, the first antenna port may be a DMRS port of the PDSCH (an antenna port associated with a DMRS). The first antenna port may be a DMRS port of the PDCCH. The first antenna port may be a CSI-RS port of CSI-RS resources. The QCL relationship may be configured by a higher layer parameter. For example, the QCL relationship may be configured by a higher layer parameter qcl-Type1 for the first downlink reference signal. For example, the QCL relationship may be configured by a higher layer parameter qcl-Type2 for the second downlink reference signal. For example, the QCL relationship between the first antenna port and the second antenna port may indicate that the first antenna port and the second antenna port are QCL. The downlink reference signal may be a CSI-RS or an SS/PBCH block.

The CORESET pool index of the first CORESETs may be different from the CORESET pool index of the second CORESETs. The different CORESETs include two different values of CORESET pool indexes may be configured by a higher layer parameter. It may be assumed that the first antenna port associated with one CORESET pool index of one serving cell is QCL with respect to a first reference signal.

The terminal apparatus 1 attempts detection of the PDCCH in a search space set. Here, an attempt to detect the PDCCH in the search space set may be an attempt to detect a candidate of the PDCCH in the search space set, may be an attempt to detect a DCI format in the search space set, may be an attempt to detect the PDCCH in the control resource set, may be an attempt to detect a candidate of the PDCCH in the control resource set, or may be an attempt to detect a DCI format in the control resource set.

The search space set is defined as a set of candidates of the PDCCH. The search space set may be a Common Search Space (CSS) set or may be a UE-specific Search Space (USS) set. The terminal apparatus 1 attempts detection of candidates of the PDCCH in some or all of a Type 0 PDCCH common search space set, a Type 0a PDCCH common search space set, a Type 1 PDCCH common search space set, a Type 2 PDCCH common search space set, a Type 3 PDCCH common search space set, and/or a UE-specific PDCCH search space set (UE-specific search space set).

The Type 0 PDCCH common search space set may be used as a common search space set having the index 0. The Type 0 PDCCH common search space set may be a common search space set having the index 0.

A CSS set is a general term for the Type 0 PDCCH common search space set, the Type 0a PDCCH common search space set, the Type 1 PDCCH common search space set, the Type 2 PDCCH common search space set, and the Type 3 PDCCH common search space set. The USS set is also referred to as a UE-specific PDCCH search space set.

A certain search space set is related to (included in or corresponds to) a certain control resource set. The index of the control resource set related to the search space set may be indicated by a higher layer parameter.

For a certain search space set, some or all of 6A to 6C may be indicated by at least a higher layer parameter:
6A) PDCCH monitoring periodicity;
6B) PDCCH monitoring pattern within a slot; and
6C) PDCCH monitoring offset.

A monitoring occasion of a certain search space set may correspond to the OFDM symbol to which the first OFDM symbol of a control resource set related to the certain search space set is mapped. A monitoring occasion of a certain search space set may correspond to a resource of a control resource set starting from the first OFDM symbol of the control resource set related to the certain search space set. The monitoring occasion of the search space set is given based at least on some or all of the PDCCH monitoring periodicity, PDCCH monitoring pattern within a slot, and the PDCCH monitoring offset.

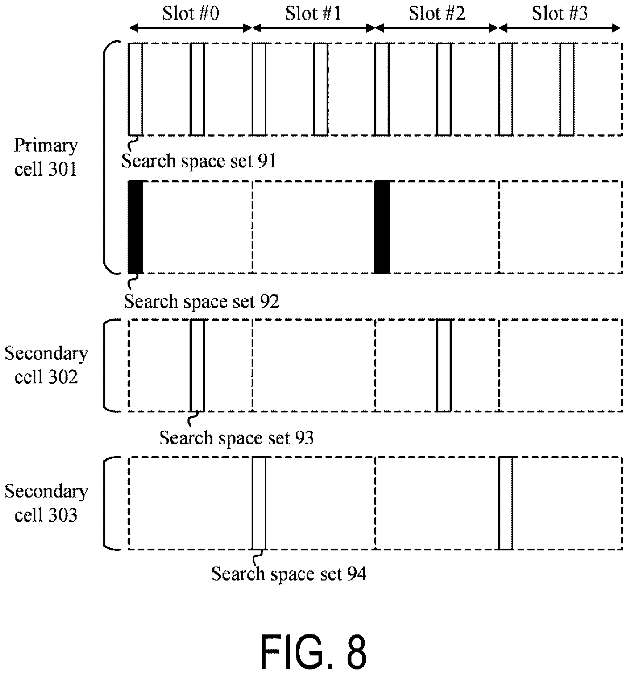

FIG. 8 is a diagram illustrating an example of monitoring occasions of search space sets according to an aspect of the present embodiment. In FIG. 8, search space sets 91 and search space sets 92 are configured in a primary cell 301, search space sets 93 are configured in a secondary cell 302, and search space sets 94 are configured in a secondary cell 303.

In FIG. 8, solid white blocks in the primary cell 301 represent the search space sets 91, solid black blocks in the primary cell 301 represent the search space sets 92, blocks in the secondary cell 302 represent the search space sets 93, and blocks in the secondary cell 303 represent the search space sets 94.

The monitoring periodicity of the search space sets 91 is set to one slot, the monitoring offset of the search space sets 91 is set to zero slots, and the monitoring pattern of the search space sets 91 is set to [1, 0, 0, 0, 0, 0, 0, 1, 0, 0, 0, 0, 0, 0]. In other words, the monitoring occasion of the search space sets 91 corresponds to the first OFDM symbol (OFDM symbol #0) and the eighth OFDM symbol (OFDM symbol #7) in each of the slots.

The monitoring periodicity of the search space sets 92 is set to two slots, the monitoring offset of the search space sets 92 is set to zero slots, and the monitoring pattern of the search space sets 92 is set to [1, 0, 0, 0, 0, 0, 0, 0, 0, 0, 0, 0, 0, 0]. In other words, the monitoring occasion of the search space sets 92 corresponds to the first OFDM symbol (OFDM symbol #0) in each of the even-numbered slots.

The monitoring periodicity of the search space sets 93 is set to two slots, the monitoring offset of the search space sets 93 is set to zero slots, and the monitoring pattern of the search space sets 93 is set to [0, 0, 0, 0, 0, 0, 0, 1, 0, 0, 0, 0, 0, 0]. In other words, the monitoring occasion of the search space sets 93 corresponds to the eighth OFDM symbol (OFDM symbol #7) in each of the even-numbered slots.

The monitoring periodicity of the search space sets 94 is set to two slots, the monitoring offset of the search space sets 94 is set to one slot, and the monitoring pattern of the search space sets 94 is set to [1, 0, 0, 0, 0, 0, 0, 0, 0, 0, 0, 0, 0, 0]. In other words, the monitoring occasion of the search space sets 94 corresponds to the first OFDM symbol (OFDM symbol #0) in each of the odd-numbered slots.

The Type 0 PDCCH common search space set may be at least used for the DCI format with a Cyclic Redundancy Check (CRC) sequence scrambled by a System Information-Radio Network Temporary Identifier (SI-RNTI).

The Type 0a PDCCH common search space set may be at least used for the DCI format with a Cyclic Redundancy Check (CRC) sequence scrambled by a System Information-Radio Network Temporary Identifier (SI-RNTI).

The Type 1 PDCCH common search space set may be at least used for the DCI format with a CRC sequence scrambled by a Random Access-Radio Network Temporary Identifier (RA-RNTI) and/or a CRC sequence scrambled by a Temporary Cell-Radio Network Temporary Identifier (TC-RNTI).

The Type 2 PDCCH common search space set may be used for the DCI format with a CRC sequence scrambled by a Paging- Radio Network Temporary Identifier (P-RNTI).

The Type 3 PDCCH common search space set may be used for the DCI format with a CRC sequence scrambled by a Cell-Radio Network Temporary Identifier (C-RNTI).

The UE-specific PDCCH search space set may be at least used for the DCI format with a CRC sequence scrambled by the C-RNTI.

In downlink communication, the terminal apparatus 1 detects a downlink DCI format. The detected downlink DCI format is at least used for a PDSCH resource assignment. The detected downlink DCI format is also referred to as a downlink assignment. The terminal apparatus 1 attempts reception of the PDSCH. Based on PUCCH resources indicated based on the detected downlink DCI format, a HARQ-ACK corresponding to the PDSCH (HARQ-ACK corresponding to a transport block included in the PDSCH) is reported to the base station apparatus 3.

In uplink communication, the terminal apparatus 1 detects an uplink DCI format. The detected DCI format is at least used for a PUSCH resource assignment. The detected uplink DCI format is also referred to as an uplink grant. The terminal apparatus 1 performs transmission of the PUSCH.

In a configured grant, an uplink grant for scheduling the PUSCH is configured for each transmission periodicity of the PUSCH. Some or all of pieces of information indicated by an uplink DCI format in a case that the PUSCH is scheduled by the uplink DCI format may be indicated by an uplink grant configured in a case of configured scheduling.

The UL slot may be a slot including UL symbols. A special slot may be a slot including a UL symbol, a flexible symbol, and a DL symbol. A DL slot may be a slot including DL symbols.

The UL symbol may be an OFDM symbol configured or indicated for uplink in time division duplex. The UL symbol may be an OFDM symbol configured or indicated for the PUSCH, the PUCCH, the PRACH, or the SRS. The UL symbol may be provided by a higher layer parameter tdd-UL-DL-ConfigurationCommon. The UL symbol may be provided by a higher layer parameter tdd-UL-DL-ConfigurationDedicated. The UL slot may be provided by the higher layer parameter tdd-UL-DL-ConfigurationCommon. The UL slot may be provided by the higher layer parameter tdd-UL-DL-ConfigurationDedicated.

The DL symbol may be an OFDM symbol configured or indicated for downlink in time division duplex. The DL symbol may be an OFDM symbol configured or indicated for the PDSCH or the PDCCH. The DL symbol may be provided by the higher layer parameter tdd-UL-DL-ConfigurationCommon. The DL symbol may be provided by the higher layer parameter tdd-UL-DL-ConfigurationDedicated. The DL slot may be provided by the higher layer parameter tdd-UL-DL-ConfigurationCommon. The DL slot may be provided by the higher layer parameter tdd-UL-DL-ConfigurationDedicated.

The flexible symbol may be an OFDM symbol that is not configured or indicated as a UL symbol or a DL symbol among the OFDM symbols within a certain periodicity. The certain periodicity may be a periodicity given by a higher layer parameter dl-UL-TransmissionPeriodicity. The flexible symbol may be an OFDM symbol configured or indicated for the PDSCH, the PDCCH, the PUSCH, the PUCCH, or the PRACH.

The higher layer parameter tdd-UL-DL-ConfigurationCommon may be a parameter that configures any one of a UL slot, and a DL slot, a special slot for each of one or multiple slots. The higher layer parameter tdd-UL-DL-ConfigurationDedicated may be a parameter that configures any one of a UL symbol, and a DL symbol, a flexible symbol for a flexible symbol in each of the one or multiple slots. tdd-UL-DL-ConfigurationCommon may be a common higher layer parameter. tdd-UL-DL-ConfigurationDedicated may be a dedicated higher layer parameter.

Multiple Transmission Reception Points (Transmit/Receive Points or TRPs) may be used. The base station apparatus 3 may include multiple TRPs (Multi-TRP). The terminal apparatus 1 may be scheduled by two TRPs in one serving cell. In Multi-TRP, the operation mode of one of single-DCI and multi-DCI may be used. In Multi-TRP, uplink control may be completed in the MAC layer and the physical layer. In Multi-TRP, downlink control may be completed in the MAC layer and the physical layer. In the Single-DCI mode, the terminal apparatus 1 may be scheduled by the same DCI for two TRPs. In a Multi-DCI mode, the terminal apparatus 1 may be scheduled by independent DCI from each TRP. In the Multi-DCI mode, each TRP in the Multi-TRP may be identified by TRP information. That is, one TRP in the Multi-TRP may be identified by one piece of TRP information. The TRP information may be used to select one TRP. In addition, an index of a Control Resource Set (CORESET) resource pool may be associated with one CORESET. The terminal apparatus 1 may transmit the PUSCH based on the index of the CORESET resource pool. TRP information may be a CORESET pool index. TRP information may be associated with the index of the CORESET resource pool. For example, a first CORESET pool index may be associated with a first TRP and a second CORESET pool index may be associated with a second TRP. The TRP information may be associated with a pool (or pool index) of a TCI state. The first one or multiple TCI states may be associated with a pool index of the first TCI state. The second one or multiple TCI states may be associated with a pool index of the second TCI state.

A Timing advance offset (TA offset) may be provided by a higher layer parameter. A Timing advance (TA) may be determined based at least on a TA offset. In one serving cell, one TA offset may be provided. In one serving cell, two TA offsets may be provided. In a case that no higher layer parameter is provided, the terminal apparatus 1 may determine the value of the TA offset. The terminal apparatus 1 may determine the value of two TA offsets in one serving cell. The value of the TA offsets may be N_{TA}, _{offset}. A higher layer parameter may be n-TimingAdvanceOffset. The determination of the TA may be adjustment of an uplink timing.

In a case that two uplink carriers are configured in one serving cell, the value of one TA offset may be applied to the two uplink carriers. In a case that two Transmission Reception Points (TRPs) are configured in one serving cell, the value of one TA offset may be applied to the two TRPs. In a case that two TRPs are configured in one serving cell, the values of two TA offsets may be applied to the TRPs, respectively.

The terminal apparatus 1 may adjust the uplink timing. For example, the terminal apparatus 1 may adjust the uplink timing in response to reception of a Timing advance command (TA command). For example, in response to the reception of one Timing advance command (TA command) for one Timing advance group (TAG), the terminal apparatus 1 may adjust the uplink timing for PUSCH/SRS/PUCCH transmission in all serving cells in one TAG. For example, in response to the reception of one TA command for one TAG, the terminal apparatus 1 may adjust the uplink timing for the PUSCH/SRS/PUCCH transmission in one or multiple serving cells belonging to one TAG. For example, the terminal apparatus 1 may adjust the uplink timing based on the value of N_{TA, offset}. N_{TA}, _{offset} may be the same for all serving cells in one TAG. N_{TA}, _{offset} may not be the same for all serving cells in one TAG. In addition, the terminal apparatus 1 may adjust the uplink timing based on one or both of the value of N_{TA}, _{offset} and a TA command. The uplink timing may be the same for all serving cells in one TAG. The uplink timing may not be the same for all serving cells in one TAG. For example, a first uplink timing may be the same for a first portion of the serving cells in one TAG. For example, a second uplink timing may be the same for a second portion of the serving cells in one TAG. All serving cells in one TAG may be divided into the first portion and a second portion. It may be an uplink timing for PUSCH/SRS/PUCCH transmission.

The terminal apparatus 1 may determine the uplink timing based on at least some or all of a TA command, a TA offset, and TRP information. The first uplink timing and the second uplink timing may be determined based at least on the TRP information. For example, Transmission Reception Point (TRP) information may be information for identifying one TRP among one or multiple TRPs. For example, the TRP information may be an index for identifying one TRP. For example, one TRP may be determined based on the TRP information. For example, the TRP information may be information for identifying one or multiple TRPs. The TRP information may be provided by a higher layer parameter. The TRP information may be included in a random access response. The TRP information may be included in a DCI format.

The first uplink timing may be determined based on a Timing adjustment indication for one TAG from an MCG. The second uplink timing may be determined based on a timing adjustment indication for one TAG from an SCG.

The TA command may be modified based on a subcarrier spacing. For example, in a subcarrier spacing configuration µ, one TA command for one TAG may indicate a change in an uplink timing. For example, the uplink timing may be changed by a multiple of 16 * 64 * T_{c}/2^{µ}. "*" may be a multiplication operator.

A Timing advance (TA) of a random access preamble may be 0.

The TA command may be included in a random access response. The TA command may be transmitted as a MAC CE command. For example, the TA command may be an Absolute timing advance command MAC CE. The random access response or the TA command T_{A} in case of an Absolute timing advance command MAC CE may indicate the value of N_{TA} for one TAG. For example, T_{A} may be an integer from 0 to 3846. For example, N_{TA} may be T_{A} * 16 * 64/2^{µ}. N_{TA} may be associated with a subcarrier spacing of certain uplink transmission. For example, the certain uplink transmission may be uplink transmission from the terminal apparatus 1. For example, the certain uplink transmission may be first uplink transmission after receiving a random access response. For example, the certain uplink transmission may be the first uplink transmission after reception of an absolute timing advance command MAC CE. T_{A} may be an index value. The uplink transmission may be uplink channel transmission.

The TA command T_{A} may indicate adjustment of the current N_{TA} value for one TAG. For example, the TA command T_{A} may indicate adjustment from N_{TA}, _{old} to N_{TA}, _{new}. N_{TA}, _{new} may be N_{TA, old} + (T_{A} - 31) * 16 * 64/2^{µ}. For example, T_{A} may be an integer from 0 to 63.

In a case that the terminal apparatus has one or multiple active uplink BWPs, the TA command (TA command value) may be associated with the maximum subcarrier spacing of the one or multiple active uplink BWPs. The TA command may be a TA command in one TAG including uplink BWPs on two uplink carriers of one serving cell. For example, N_{TA}, _{new} for one uplink BWP with the first subcarrier spacing may be rounded to match the timing advance (TA) granularity for one uplink BWP with the first subcarrier spacing. The rounding of the value may be rounding of the value. For example, N_{TA}, _{new} may be rounded while maintaining Timing advance (TA) accuracy requirements.

Adjustment of N_{TA} to a positive value may indicate advancing of an uplink transmission timing (uplink timing) for one Timing advance group (TAG). Adjustment of N_{TA} to a negative value may indicate delaying of an uplink transmission timing for one TAG.

In a case that one TA command is received in a first slot n, adjustment of the uplink transmission timing may be applied from the beginning of the second slot. The first slot n may be an uplink slot. The uplink slot may be a slot corresponding to an uplink frame. The second slot may be n + k + 1 + 2^{µ} * K_{offset}. That is, the second slot may be a slot after k + 1 + 2^{µ} * K_{offset} slots from the first slot n. K_{offset} may be provided by a higher layer parameter. k may be ceil (N^{subframe, µ}ₛₗₒₜ · (N_{T, 1} + N_{T, 2} + N_{TA}, ₘₐₓ + 0.5)/T_{sf}). The unit of N_{T, 1} may be milliseconds. N_{T, 1} may be the unit period of milliseconds of N₁ symbols. The N₁ symbols may correspond to a PDSCH processing time. N_{T, 2} may be the unit period of milliseconds of N₂ symbols. The N₂ symbols may correspond to a PUSCH preparation time. N_{TA}, ₘₐₓ may be a maximum timing advance (TA) value in the unit period of milliseconds. N_{TA}, ₘₐₓ may be a maximum TA value that can be provided by a 12-bit TA command field. N^{subframe, µ}ₛₗₒₜ may be the number of slots in one subframe. T_{sf} may be one millisecond. T_{sf} may be the period of a subframe. K_{offset} may be K_{cell}, _{offset} - K_{UE}, _{offset}. K_{cell}, _{offset} may be provided by a higher layer parameter. K_{UE}, _{offset} may be provided by one MAC CE command. K_{cell}, _{offset} may be 0. K_{UE}, _{offset} may be 0. One or both of N₁ and N₂ may be determined in association with the minimum Subcarrier spacing (SCS). The minimum subcarrier spacing may be a minimum subcarrier spacing among subcarrier spacings of all configured downlink BWPs and all configured uplink BWPs. In a case of µ = 0, N₁ may be 14. The slot n and N^{subframe, µ}ₛₗₒₜ may be determined in association with the minimum subcarrier spacing. N_{TA}, ₘₐₓ may be determined in association with the minimum subcarrier spacing. The slot n may be the last slot among one or multiple slots that overlap with the slot for PDSCH reception. For PDSCH reception, it may be assumed that T_{TA} = 0. One TA command may be received on the PDSCH. A PDSCH including one TA command may be received. The PDSCH may provide one TA command.

In a case that the terminal apparatus 1 changes the active uplink BWP, the terminal apparatus 1 may determine the TA command (the TA command value) based on the subcarrier spacing of the changed active uplink BWP. For example, in a case that the terminal apparatus 1 changes the active uplink BWP in the period from the time the TA command is received to the time the adjustment for the uplink transmission timing is applied, the terminal apparatus 1 may determine the TA command based on the subcarrier spacing of the new active uplink BWP. In a case that the active uplink BWP is changed after the adjustment for the uplink transmission timing is applied, the terminal apparatus 1 may assume the same absolute timing advance command value (absolute timing advance command MAC CE). That is, the first absolute timing advance command value before the active uplink BWP is changed may be the same as the second absolute timing advance command value after the active uplink BWP is changed.

In a case that the downlink timing is changed and in a case that the downlink timing is not corrected, the terminal apparatus 1 may change N_{TA}. In a case that the downlink timing is changed and in a case that the downlink timing is partially corrected by the uplink timing adjustment without the TA command, the terminal apparatus 1 may change N_{TA}. The uplink timing adjustment may be determination or change of the uplink timing.

In a case that two adjacent slots are overlapped by one TA command, the latter slot may be reduced.

A timing advance group (TAG) may be a group of one or multiple serving cells. One or multiple serving cells may be configured by RRC. The one or multiple serving cells may use one TA value. The one or multiple serving cells may use one timing reference cell. A primary TAG (PTAG) may be a TAG including an SpCell. A secondary TAG (STAG) may be a TAG not including an SpCell. The one or multiple serving cells may use two TA values.

A subTAG may be one serving cell or a group of multiple serving cells. A subTAG may be a group of serving cells using the same TA (TA value). For example, a subTAG may be associated with one piece of TRP information. For example, a subTAG may be associated with one TRP. A serving cell associated with a subTAG may not be associated with a TAG. For example, a subTAG may be configured for one serving cell. For example, a serving cell associated with a subTAG may be associated with a TAG. A subTAG may be a group of one or multiple TRPs. A subTAG may be a group of TRPs using the same TA (TA value). For example, a subTAG may be associated with one serving cell.

The RRC layer may configure one or multiple higher layer parameters for maintenance of uplink time alignment. For example, the RRC layer may configure a time alignment timer. For example, the time alignment timer may be configured by a higher layer parameter timeAlignmentTimer. The time alignment timer may control a first time. The first time may be a time at which a MAC entity regards multiple serving cells as belonging to an associated TAG. For example, the time alignment timer may be a time for uplink time alignment. That is, the fact that the time alignment timer is operating may mean that time alignment has been achieved. The time alignment may mean that an uplink timing is determined (or adjusted). That is, TA may be time alignment.

The RRC layer may configure one or multiple higher layer parameters for maintenance of multiple times of uplink time alignment. For example, the RRC layer may configure multiple time alignment timers. At least one of the multiple time alignment timers may be associated with a subTAG. At least one of the multiple time alignment timers may be associated with a TAG.

The time alignment timers may correspond to one subTAG. For example, the time alignment timer may control the time at which the MAC entity regards one or multiple serving cells as belonging to the subTAG. For example, the time alignment timer may control the time at which the MAC entity regards one or multiple TRPs as belonging to the subTAG.

The MAC entity may perform some or all of the first to fourth processing operations.

**In** the first processing, in a case that a Timing advance command MAC CE (TA command MAC CE) is received and N_{TA} is carried in the indicated TAG, the MAC entity may apply the TA command for the indicated TA command. In the first processing, in a case that a Timing advance command MAC CE (TA command MAC CE) is received and N_{TA} is carried in the indicated TAG, the MAC entity may start or restart the time alignment timer associated with the indicated TA command. The time alignment timer may be timeAlignmentTimer.

The second processing may be processing performed in a case that the TA command is received in a random access response (random access response message). The second processing may be processing in a case that a TA command is received in a message B (MSGB). The second processing may be processing in one serving cell belonging to one TAG (or subTAG). The second processing may be processing in the SpCell. **In** the second processing, in a case that a Random access preamble is not selected from preambles in a Contention-based random access (CBRA), the MAC entity may apply a TA command for one TAG (or subTAG) or may start or restart a time alignment timer associated with one TAG (or subTAG). The TA command may be received in a random access response.

**In** the second processing, in a case that the time alignment timer associated with one TAG (or subTAG) is not running, the MAC entity may apply the TA command for one TAG (or subTAG) and may start the time alignment timer. Furthermore, in a case that Contention resolution is not successfully completed, the MAC entity may stop the time alignment timer.

In the second processing, in a case that the random access preamble is selected from the preamble in the CBRA and in a case that the time alignment timer associated with one TAG (or subTAG) is running, the MAC entity may ignore the received TA command.

In the third processing, in a case that an Absolute Timing Advance (TA) Command is received for a message A (MSGA) transmission including a C-RNTI MAC CE, the MAC entity may apply the Absolute TA Command for a PTAG and may start or restart a time alignment timer associated with the PTAG.

The fourth processing may be processing in a case that the time alignment timer expires. In the fourth processing, in a case that the time alignment timer is associated with the PTAG (or the subTAG associated with the first TRP), the MAC entity may perform some or all of the first sub-operation to the seventh sub-operation. The first sub-operation may be to flush all HARQ buffers for all serving cells. The second sub-operation may be to notify the RRC of release of PUCCHs for all serving cells. The third sub-operation may be to notify the RRC of release of SRSs for all serving cells. The fourth sub-operation may be to clear the configured downlink assignment and the configured uplink grant. The fifth sub-operation may be to clear a PUSCH resource for semi-persistent CSI reporting. The sixth sub-operation may be to regard all time alignment timers being expired. The seventh sub-operation may be to maintain N_{TA} for all TAGs (or subTAGs). That is, in a case that the time alignment timer is not running, the MAC entity may not change N_{TA}. In the fourth processing, in a case that the time alignment timer is associated with a STAG (or the subTAG associated with the second TRP), the MAC entity may perform some or all of the 8th sub-operation to the 13th sub-operation. The 8th sub-operation may be to flush all HARQ buffers for the serving cell belonging to this TAG (or this subTAG). The 9th sub-operation may be to notify the RRC of release of PUCCHs for the serving cell belonging to the TAG (or the subTAG). The 10th sub-operation may be to notify the RRC of release of SRSs for the serving cell belonging to the TAG (or the subTAG). The 11th sub-operation may be to clear configured downlink assignment and a configured uplink grant for the serving cell belonging to the TAG (or the subTAG). The 12th sub-operation may be to clear a PUSCH resource for a semi-persistent CSI report for the serving cell belonging to the TAG (or the subTAG). The 13th sub-operation may be to maintain N_{TA} of the TAG (or the subTAG).

A HARQ buffer may store a MAC PDU to be transmitted. One HARQ buffer may be associated with one HARQ process. One HARQ process may correspond to one HARQ process ID. To flush a HARQ buffer may be to empty a HARQ buffer. In a case that a HARQ entity requests new transmission for one transport block, the HARQ process may store the MAC PDU in the associated HARQ buffer.

In a case that the MAC entity stops uplink transmission for the SCell to exceed the Maximum uplink transmission timing difference, the MAC entity may regard that stop of the time alignment timer as being expired. The time alignment timer may be a time alignment timer associated with the SCell.

In a case that the time alignment timer expires, the MAC entity may not perform uplink transmission. In a case that the time alignment timer is not running, the MAC entity may not perform uplink transmission. The uplink transmission may not include random access preamble transmission. The uplink transmission may not include message A transmission. The uplink transmission may be uplink transmission in one serving cell. The uplink transmission may be uplink transmission in one TRP. This time alignment timer may be a time alignment timer associated with a TAG to which one serving cell belongs. This time alignment timer may be a time alignment timer associated with a subTAG to which one serving cell belongs. This time alignment timer may be a time alignment timer associated with a subTAG to which one TRP belongs.

In a case that the time alignment timer associated with one subTAG expires, the MAC entity may not perform uplink transmission for one or multiple TRPs included in the one subTAG. This uplink transmission may not include one or both of the random access preamble transmission and the message A transmission. For example, in a case that a time alignment timer associated with one TRP expires, the MAC entity may not perform uplink transmission for the one TRP.

In a case that the time alignment timer associated with the PTAG is not running, the MAC entity may not perform uplink transmission in any serving cell. This uplink transmission may not include random access preamble transmission in an SpCell. This uplink transmission may not include message A transmission in the SpCell.

A MAC Protocol Data Unit (PDU) may be a bit string arranged in 1 byte. The MAC PDU may be transport blocks. For example, the MAC PDU may include one or multiple MAC subPDUs. Each MAC subPDU may include one MAC subheader. Each MAC subPDU may include one MAC subheader and one MAC Service Data Unit (SDU). Each MAC subPDU may include one MAC subheader and one MAC Control Element (CE). Each MAC subPDU may include one MAC header and padding. The MAC SDU may be data from a higher layer. The MAC SDU may be data to a higher layer.

A TA command may be a MAC CE. In addition, the TA command may be included in the MAC CE. For example, the TA command may be included in a TA command MAC CE. The TA command MAC CE may include a TAG ID and a TA command. The TAG ID may indicate one or both of one TAG and one subTAG. A TAG including an SpCell may correspond to a TAG ID 0. The TAG ID may be indicated with 2 bits. The TAG ID may indicate one subTAG. The TAG ID may indicate one TRP. The TA command may indicate T_{A}. T_{A} may be an integer from 0 to 63. T_{A} may be used for controlling an amount of timing adjustment. The timing adjustment may be applied by the MAC entity. The TA command may be indicated with 6 bits. The TA command MAC CE may be identified by a MAC subheader with a certain Logical channel ID (LCID). A certain LCID may be the LCID corresponding to the index 61.

A TA command may be included in an absolute Timing advance command MAC CE (absolute TA command MAC CE). The absolute TA command MAC CE may include a reserved bit and a TA command. The TA command may indicate an index value T_{A}. T_{A} may be used for controlling an amount of timing adjustment. The TA command may be indicated with 12 bits. Reserved bits may be four bits. The value 0 may be set for the reserved bit. The absolute TA command MAC CE may include at least a TAG ID. The TAG ID may indicate one subTAG. The TAG ID may indicate one TRP. The absolute TA command MAC CE may be identified by a MAC subheader with a certain eLCID. The certain eLCID may be an eLCID corresponding to the index 316.

The TA command may be included in a random access response. For example, the TA command may be included in the MAC payload of the random access response. For example, the TA command may indicate an index value T_{A}. T_{A} may be used for controlling an amount of timing adjustment. The size of a TA command field may be 12 bits. The random access response may include the TA command, an uplink grant, and a Temporary C-RNTI. The uplink grant may indicate resources to be used in uplink. The uplink grant field may be 27 bits. The Temporary C-RNTI may indicate a temporary ID used by the MAC entity during random access. The Temporary C-RNTI field may be 16 bits. The random access response may be a MAC RAR. For example, the random access response may be fallbackRAR. The TA command may be included in a message B (MSGB). For example, the TA command may be included in the MAC payload of message B. The TA command may be included in successRAR. In addition, the random access response may include TRP information. For example, the TA corresponding to one TRP identified by the TRP information may be indicated by the TA command included in the random access response. As TRP information, the random access response may include an index of a CORSET resource pool.

Furthermore, multiple TA commands may be indicated by one random access response. For example, in a case that two TA commands are transmitted in one random access response, the TA command for each TRP may be indicated by the first TA command and the second TA command. At this time, the first TA command and the second TA command may be indicated in different fields included in the random access response. In addition, the first TA command and the second TA command may be indicated in one field included in the random access response, and the first TA command and the second TA command corresponding to the value (bit string or index) of the field may be associated with each other (joint coding). Furthermore, the second TA command may be defined by a difference from the first TA command.

Random access (or a random access procedure) may be initiated by a MAC entity. The random access may be initiated by a PDCCH order (or PDCCH). The random access may be initiated by RRC. Random access in the SCell may be initiated by a PDCCH order. In addition, random access may be triggered by the MAC entity. Random access may be triggered by a PDCCH order. Random access may be triggered by RRC.

For example, random access may be triggered (initiated) by a certain event. For example, a certain event may be Initial access from an RRC_IDLE state. For example, the certain event may be an RRC connection Re-establishment procedure. For example, the certain event may be arrival of uplink or downlink data in the RRC_CONNECTED state in a case that the uplink synchronization state is "non-synchronized". For example, the certain event may be arrival of uplink data in the RRC_CONNECTED state in a case that there are no PUCCH resources. For example, the certain event may be a failure of a scheduling request. For example, the certain event may be a request by RRC in response to a handover. For example, the certain event may be RRC connection Resume. For example, the certain event may be establishing Time alignment. For example, the certain event may be establishing time alignment for an STAG. For example, the certain event may be establishing time alignment for a certain TRP. For example, the certain event may be requesting Other SI. For example, the certain event may be Beam failure recovery. For example, the certain event may be acquisition of a TA.

The random access (random access type) may be a 4-step-random access (4-step-random access type). The random access (random access type) may be a 2-step-random access (2-step-random access type). The random access may support Contention-based random access (CBRA). That is, the random access may be CBRA. The random access may support Contention-free random access (CFRA). That is, the random access may be CFRA. For example, the random access may be CBRA of the 4-step-random access type. For example, the random access may be CFRA of the 4-step-random access type. For example, the random access may be CBRA of the 2-step-random access type. For example, the random access may be CFRA of the 2-step-random access.

In the CBRA of the 4-step-random access type, the terminal apparatus 1 may transmit a message 1 (random access preamble), receive a message 2 (random access response), transmit a message 3, and receive a message 4 (contention resolution). In the CBRA of the 2-step-random access type, the terminal apparatus 1 may transmit a message A (random access preamble and PUSCH payload) and receive a message B (the contention resolution). In the CFRA of the 4-step-random access type, the terminal apparatus 1 may receive assignment of a random access preamble, transmit the random access preamble, and receive a random access response. In the CFRA of the 2-step-random access type, the terminal apparatus 1 may receive assignment of a random access preamble and a PUSCH, transmit the random access preamble and the PUSCH, and receive a random access response.

In a case that no CFRA resources are configured, a Reference signal received power (RSRP) Threshold may be used to select one of the 2-step-random access type and the 4-step-random access type. In a case that CFRA resources of the 4-step-random access type are configured, the terminal apparatus 1 may perform random access of the 4-step-random access type. In a case that CFRA resources of the 2-step-random access type are configured, the terminal apparatus 1 may perform random access of the 2-step-random access type.

The message 1 may include one preamble in the PRACH. After transmission of the message 1, the terminal apparatus 1 may monitor one response (random access response) within a configured window. In the CFRA, a dedicated preamble may be assigned. In the CFRA, the terminal apparatus 1 may end the random access in response to the reception of the random access response. In the CBRA, the terminal apparatus 1 may transmit the message 3 in response to the reception of the random access response. For example, the terminal apparatus 1 may transmit the message 3 by using an uplink grant (random access response grant). In the CBRA, the terminal apparatus 1 may monitor the message 4 (contention resolution). In a case that contention resolution after the transmission of the message 3 is not successful, the terminal apparatus 1 may transmit the message 1.

The message A may include one preamble in the PRACH. In addition, the message A may also include a payload in the PUSCH. After transmission of the message A, the terminal apparatus 1 may monitor one response (random access response) within a configured window. In the CFRA, the dedicated preamble and PUSCH resources for the transmission of the message A may be assigned. In the CFRA, the terminal apparatus 1 may end the random access in response to the reception of one response. In the CBRA, in a case that the contention resolution is successful, the terminal apparatus 1 may end the random access. In a case that a fallback indication is received in the message B, the terminal apparatus 1 may transmit the message 3 based on the fallback indication and monitor the contention resolution. In a case that the contention resolution after the transmission of the message 3 is not successful, the terminal apparatus 1 may transmit the message A. In a case that the random access of the 2-step-random access type is not completed, the terminal apparatus 1 may be configured to be switched to the CBRA of the 4-step-random access type.

For a MAC entity, there may be only one random access that can proceed simultaneously. In a case that first random access is in progress and in a case that second random access is triggered, the terminal apparatus 1 may continue the first random access. In a case that first random access is in progress and in a case that second random access is triggered, the terminal apparatus 1 may initiate the second random access.

The RRC may configure some or all of the first to eighth higher layer parameters for random access. A first set of PRACH Occasions for message 1 (random access preamble) transmission may be configured by the first higher layer parameter. The first set may be used for the message A PRACH. A second set of PRACH occasions for random access preamble transmission for the message A may be configured by the second higher layer parameter. The PRACH occasions may be referred to as RA occasions. The PRACH occasions may be referred to as RACH occasions.

Power for the random access preamble may be configured by the third higher layer parameter. For example, power for the first (first-transmitted) random access preamble may be configured by the third higher layer parameter.

A threshold for RSRP may be configured by the fourth higher layer parameter. For example, the threshold for RSRP is SS/PBCH block selection, or. It may be a threshold for RSRP for CSI-RS selection. For example, the threshold for RSRP may be a threshold for RSRP for selecting a signal from two uplink carriers. The two uplink carriers may be of Normal Uplink (NUL) and Supplementary Uplink (SUL).

The maximum number of transmission operations of one or both of the message 1 and message A may be configured by the fifth higher layer parameter. One or both of the message 1 and message A may change the transmission power for each transmission operation. For example, the power for one or both of the message 1 and message A may be changed based on the sixth higher layer parameter. The sixth higher layer parameter may be a power ramping factor.

The random access preamble may be configured by the seventh higher layer parameter. For example, the index of the random access preamble used in the PRACH occasions may be configured by the seventh higher layer parameter. The seventh higher layer parameter may indicate any value from 0 to 63.

The number of SS/PBCH blocks mapped to each PRACH occasion may be defined by the eighth higher layer parameter. In addition, the number of CBRA random access preambles mapped to each SS/PBCH block may be defined by the eighth higher layer parameter. The CBRA random access preamble may be a Contention-based Random Access Preamble. Transmission of one or both of the message 1 and message A may use the random access preamble corresponding to group A or group B. The terminal apparatus 1, for example, may transmit the message A using a random access preamble group A. The terminal apparatus 1, for example, may transmit the message A using a random access preamble group B.

In a case that random access (random access procedure) is initiated in one serving cell, the MAC entity may flush a message 3 buffer, flush a message A buffer, select a carrier for performing random access, determine a random access type, and perform a random access resource selection procedure (Random Access Resource slection procedure).

The MAC entity may determine power based on the counter for each random access type. The MAC entity may calculate RA-RNTI associated with a PRACH occasion in which the random access preamble is transmitted. The MAC entity may indicate to the physical layer to transmit the random access preamble using the selected PRACH occasion. The RA-RNTI associated with the PRACH occasion may be calculated based on some or all of the index of the first OFDM symbol of the PRACH occasion, the index of the first slot of the PRACH occasion in one system frame, the index of the PRACH occasion in the frequency domain, and an uplink carrier on which the random access preamble is transmitted.

The MAC entity may start a first window from the end of the random access preamble transmission. The random access preamble may be a Contention-free Random Access Preamble (CFRA random access preamble). The random access preamble may be a Contention-based Random Access Preamble (CBRA random access preamble). The MAC entity may monitor the PDCCH for a random access response. For example, while the first window is running, the MAC entity may monitor the PDCCH. The PDCCH may be a PDCCH in an SpCell. A notification of reception of the PDCCH may be received from the physical layer. The PDCCH transmission may be addressed to the C-RNTI. In a case that the CFRA random access preamble is transmitted by the MAC entity, the MAC entity may regard that the random access has been successfully completed.

Valid downlink assignment may be received on the PDCCH corresponding to the RA-RNTI. Received transport blocks may be decoded. The random access response may include a certain MAC subPDU. The certain MAC subPDU may carry a random access preamble ID. The MAC entity may regard that the random access response has been successfully received based at least on the random access response including a certain MAC subPDU.

The MAC entity may regard that the random access response has been successfully received. The MAC entity may regard that the random access has been successfully completed, may indicate reception of acknowledgements (ACKs) to higher layers, and may apply a received TA command based at least on the random access response regarded to have been successfully received. For example, the MAC entity may process the value of a received UL grant. For example, the MAC entity may indicate the received UL grant to the physical layer.

In a case that the reception of the random access response is regarded as being successful and in a case that the random access preamble is transmitted in one serving cell, the MAC entity may apply (process) the TA command for one serving cell. The MAC entity may apply the TA command for the one serving cell based at least on the random access response regarded as having been successfully received and the random access preamble being transmitted in the one serving cell. The MAC entity may apply the TA command for one TRP based at least on the random access response regarded as having been successfully received. For example, in a case that the MAC PDU includes a TA command (for example, an absolute TA command MAC CE), the MAC entity may apply (process) the TA command. For example, the MAC PDU may be included in a transport block. For example, one or multiple MAC SDUs may be multiplexed into a transport block. For example, the one or multiple MAC SDUs may be demultiplexed from a transport block.

Prior to the initiation of random access (a physical random access procedure), the physical layer may receive a set of SS/PBCH block indices from a higher layer and may provide a set of RSRP measurement to a higher layer. Before the initiation of the random access, the physical layer may indicate to a higher layer to perform type-1-random access. Before the initiation of the random access, the physical layer may indicate to a higher layer to perform type-2-random access. The type-1-random access may be random access of the 4-step-random access type. The type-2-random access may be random access of the 2-step-random access type. Before the initiation of the random access, the physical layer may receive one or multiple parameters from a higher layer. The one or multiple parameters may include a configuration of PRACH transmission parameters. The PRACH transmission parameter may be a PRACH preamble format for PRACH transmission, may be time resources, or may be frequency resources. The one or multiple parameters may include a parameter for determining a root sequence. The one or multiple parameters may include a parameter for determining a cyclic shift in a PRACH preamble sequence (a sequence of random access preambles). The one or multiple parameters may include TRP information. For example, one random access preamble may be associated with one TRP.

The random access may include at least transmission of the message 1 on the PRACH and the message 2. The random access may include transmission of the message 1 on the PRACH, the message 2, transmission of the PUSCH scheduled by a random access response grant (Random access response uplink grant), and the PDSCH for contention resolution. The message 1 may be a random access preamble. The message 2 may be a random access response message (random access response). For example, the message 2 may be a random access response accompanied with a PDCCH/PDSCH. The random access procedure may be referred to as random access.

The random access may include at least transmission of the message A and reception of the message B. The random access may include transmission of the message A, reception of the message B, transmission of the PUSCH scheduled by a random access response grant, and the PDSCH for contention resolution. The message A may be the random access preamble in the PRACH and the PUSCH. The message B may be a random access response. For example, the message B may be a random access response accompanied with a PDCCH/PDSCH. The random access response grant may be a fallback random access response grant.

In a case that random access is initiated by a PDCCH order, PRACH transmission (random access preamble transmission) may have the same subcarrier spacing as that of the PRACH transmission initiated by a higher layer. In a case that two uplink carriers are configured in one serving cell and in a case that the terminal apparatus 1 detects the PDCCH order, the terminal apparatus 1 may use the value of the UL/SUL indication field from the detected PDCCH order in order to determine one uplink carrier for the PRACH transmission. In a case that N TRPs are configured in one serving cell and in a case that the terminal apparatus 1 detects the PDCCH order, the terminal apparatus 1 may use one field (or a value of the field) of the detected PDCCH order in order to determine one TRP for the PRACH transmission.

Random access may be triggered by a higher layer or PDCCH order in response to a request for PRACH transmission. The configuration by the higher layer for the PRACH transmission may include some or all of the configuration for the PRACH transmission, the preamble index (index of the random access preamble), the preamble SCS (subcarrier spacing of the random access preamble), the RA-RNTI, the PRACH resource, and the TRP information.

The random access preamble may be a contention-based preamble. The random access preamble may be a contention-free preamble. The number of contention-based preambles for each valid PRACH occasion and each SS/PBCH block index may be configured by a higher layer parameter. The PRACH occasion may be valid. For example, the PRACH occasion may be valid based at least on an OFDM symbol configured for time division duplexing.

The terminal apparatus 1 may attempt to decode the DCI format 1_0 accompanied with CRC scrambled with a RA-RNTI. For example, in response to the PRACH transmission, the terminal apparatus 1 may attempt to decode the DCI format 1_0 accompanied by CRC scrambled with a RA-RNTI in a certain window. The certain window may be started based at least on the first OFDM symbol of a CORESET.

The terminal apparatus 1 may pass a transport block to the higher layer based at least on the fact that the terminal apparatus 1 detects the DCI format 1_0 accompanied by CRC scrambled with the RA-RNTI and the fact that the terminal apparatus 1 receives the transport block. For example, the transport may be received in the PDSCH within a certain window. The higher layer may analyze (parse) a transport block corresponding to a Random access preamble identity (RAPID) associated with the PRACH transmission. In a case that the higher layer identifies a RAPID in a random access response (random access response message), the higher layer may indicate an uplink grant (random access response grant) to the physical layer. The random access response may be a random access response of a transport block. The random access response grant may be a random access response uplink grant.

In a case that the terminal apparatus 1 does not detect the DCI format 1_0 accompanied by CRC scrambled with the RA-RNTI in the window or in a case that the terminal apparatus 1 does not receive the transport block in the PDSCH in the window, the higher layer may indicate the physical layer to transmit the PRACH. In addition, in a case that the higher layer does not identify the RAPID associated with the PRACH transmission, the higher layer may indicate the physical layer to transmit the PRACH. For example, the terminal apparatus 1 may be expected to transmit the PRACH at a predetermined time after the last OFDM symbol of the window. In addition, the terminal apparatus 1 may be expected to transmit the PRACH at a predetermined time after the last OFDM symbol of PDSCH reception. Transmission of the PRACH may mean transmission of a random access preamble.

The PDCCH order may trigger a Contention-free random access procedure (CFRA). For example, the PDCCH order may trigger a CFRA in one SpCell. The PDCCH order may initiate PRACH transmission. In a case that the terminal apparatus 1 attempts to detect the DCI format 1_0 accompanied by CRC scrambled with the RA-RNTI in response to the PRACH transmission initiated by the PDCCH order, it may be assumed that the PDCCH including the DCI format 1_0 and the PDCCH have the QCL characteristics in the same DMRS antenna port. The QCL properties may be large scale properties of a channel.

The random access response grant may be composed of one or multiple fields. For example, the one or multiple fields may include a frequency hopping flag field. For example, the one or multiple fields may include a frequency domain resource assignment field (or a PUSCH frequency resource assignment field). For example, the one or multiple fields may include a time domain resource assignment field (or a PUSCH time resource assignment field). For example, the one or multiple fields may include a Transmission power control (TPC) command field. For example, the one or multiple fields may include a CSI request field. For example, the one or multiple fields may include a field with TRP information.

In order to improve the degree of freedom of a terminal position, reduce interference, expand the coverage, and the like, it is a problem that the terminal apparatus 1 determines an uplink timing for each of multiple transmission and/or reception points. For example, means 1 may be used to solve this problem.

In the following, the means 1 according to an aspect of the present embodiment will be described.

The terminal apparatus 1 may transmit a first random access preamble in first random access. The terminal apparatus 1 may receive a first random access response in the first random access. The terminal apparatus 1 may transmit a second random access preamble in second random access. The terminal apparatus 1 may receive the second random access response in the second random access. For example, in a case that the first random access is initiated (triggered), the terminal apparatus 1 may transmit the first random access preamble and may receive the first random access response. In a case that the second random access is initiated (triggered), the terminal apparatus 1 may transmit the second random access preamble and may receive the second random access response.

The terminal apparatus 1 may transmit the first random access preamble based at least on first TRP information. For example, the first random access preamble may correspond to a first TRP. The terminal apparatus 1 may receive the first random access response including the first TRP information. The terminal apparatus 1 may transmit the second random access preamble based at least on second TRP information. For example, the second random access preamble may correspond to a second TRP. The terminal apparatus 1 may receive the second random access response including the second TRP information. For example, a first higher layer parameter may indicate that the first random access preamble is transmitted to the first TRP. For example, a second higher layer parameter may indicate that the second random access preamble is transmitted to the second TRP. The first higher layer parameter may be the same as the second higher layer parameter.

The random access response may include a TA command. For example, the first random access response may include a first TA command. For example, the second random access response may include a second TA command. The first TA command may be different from the second TA command. That is, the first TA command may be independent of the second TA command. The terminal apparatus 1 may receive the first TA command. The terminal apparatus 1 may receive the second TA command.

A first TA may be determined based on the first TA command. That is, a first uplink timing may be determined based on the first TA command. The first uplink timing may be an uplink timing between the terminal apparatus 1 and the first TRP. A second TA may be determined based on the second TA command. That is, a second uplink timing may be determined based on the second TA command. The second uplink timing may be an uplink timing between the terminal apparatus 1 and the second TRP. The uplink timing may be TA.

The first TRP and the second TRP may be different TRPs. The first TRP and the second TRP may be configured by a higher layer parameter. The first TRP and the second TRP may be determined by a higher layer parameter. In a case that no higher layer parameter is configured, it may be assumed that there is no second TRP. The first TRP may be identified with a first ID (or index). The second TRP may be identified with a second ID (or index). The first ID and the second ID may be configured by a higher layer parameter. The first ID and the second ID may be included in a DCI format. The first ID and the second ID may be included in a random access response.

The base station apparatus 3 may be configured with the first TRP and the second TRP. For example, the base station apparatus 3 may include two transmission and/or reception points (the base station apparatus 3a and the base station apparatus 3b). Furthermore, the first TRP may be a transmission and/or reception point of the base station apparatus 3a. The second TRP may be a transmission and/or reception point of the base station apparatus 3b. The base station apparatus 3a may have the functions of the base station apparatus 3 or may be independent of the base station apparatus 3b. The base station apparatus 3b may have the functions of the base station apparatus 3 or may be independent of the base station apparatus 3a. For example, the base station apparatus 3a may not be synchronized with the base station apparatus 3b. The TRP information may be used to select one of the base station apparatus 3a and the base station apparatus 3b.

The first TA command and the second TA command may be applied to one serving cell. For example, the first TA command and the second TA command may simultaneously be applied to one serving cell. For example, the first TA command and the second TA command may be received in one serving cell. For example, the first TA command and the second TA command may be TA commands for one serving cell. For example, the first TA command and the second TA command may be TA commands for one TAG. For example, the first TA command and the second TA command may be TA commands for one time alignment timer. That is, the first TA command and the second TA command may be TA commands for one time alignment timer associated with one TAG.

First TA and second TA may be applied to one serving cell. For example, the first TA and the second TA may be received in one serving cell. For example, the first TA and the second TA may be TA for one serving cell. That is, the terminal apparatus 1 may use the first TA and the second TA in one serving cell. The first TA may not be updated (changed) based on the second TA command. The second TA may not be updated (changed) based on the first TA command.

A first uplink timing and a second uplink timing may be applied to one serving cell. For example, the first uplink timing and the second uplink timing may be received in one serving cell. For example, the first uplink timing and the second uplink timing may be uplink timings for one serving cell. That is, the terminal apparatus 1 may use the first uplink timing and the second uplink timing in one serving cell. The first uplink timing may not be updated (changed) based on the second TA command. The second uplink timing may not be updated (changed) based on the first TA command.

The terminal apparatus 1 may switch between the first uplink timing and the second uplink timing. For example, the terminal apparatus 1 may use one of the first uplink timing and the second uplink timing for one uplink transmission operation in one serving cell. For example, the terminal apparatus 1 may associate one of the first uplink timing and the second uplink timing with one uplink transmission operation based on the TRP information. For example, the terminal apparatus 1 may associate one of the first uplink timing and the second uplink timing with one uplink transmission operation based on a subTAG. For example, the terminal apparatus 1 may associate one of the first uplink timing and the second uplink timing with one uplink transmission operation based on an indication from a higher layer (for example, the MAC layer). For example, the terminal apparatus 1 may select one of the first uplink timing and the second uplink timing. For example, the terminal apparatus 1 may select one of the first uplink timing and the second uplink timing based on certain information. The certain information may be one of the TRP information and the subTAG. The terminal apparatus 1 may receive certain information or a parameter including certain information. A parameter including certain information may be one of a higher layer parameter and a DCI format.

The terminal apparatus 1 may transmit a first uplink channel corresponding to the first uplink timing and a second uplink channel corresponding to the second uplink timing in one serving cell. The first uplink channel and the second uplink channel may be the same. For example, first uplink channel transmission and second uplink channel transmission may be the same. That is, the terminal apparatus 1 may simultaneously transmit one uplink operation corresponding to the first uplink timing and the second uplink timing in one serving cell.

The first random access may be CBRA and the second random access may be CFRA. For example, the second random access may be initiated (triggered) in a PDCCH order. One of the first random access and the second random access may be CFRA. One of the first random access and the second random access may be initiated in a PDCCH order. For example, in a case that the second random access is CFRA, the second random access response may correspond to the first TRP. For example, in a case that the second random access is CFRA, the second random access preamble may correspond to the second TRP and the second random access response may correspond to the first TRP. That is, CFRA may be initiated to establish the second TA. That is, a CSS set may not be configured for the second TRP.

The first random access may be first CBRA and the second random access may be second CBRA. The first random access and the second random access may not be simultaneously performed. For example, the first random access may be based on some or all of a first SS/PBCH block index, a first SS/PBCH block, and a first SS/PBCH candidate. The second random access may be based on some or all of a second SS/PBCH block index, a second SS/PBCH block, and a second SS/PBCH candidate.

The first random access preamble may be transmitted to the first TRP. The second random access preamble may be transmitted to the second TRP. For example, a higher layer parameter may indicate that the first random access preamble is transmitted to the first TRP. For example, a higher layer parameter may indicate that the second random access preamble is transmitted to the second TRP.

One or both of the first TA and the first uplink timing may be determined based at least on a first TA offset and the first TA command. One or both of the second TA and the second uplink timing may be determined based at least on a second TA offset and a second TA command. The first TA offset and the second TA offset may be the same. The first TA offset and the second TA offset may be configured by, for example, one higher layer parameter. For example, in a case that one higher layer parameter is not provided, the terminal apparatus 1 may determine the first TA offset and the second TA offset as one value.

The first TA command may control the amount of first timing adjustment (first uplink timing adjustment). The second TA command may control the amount of second timing adjustment (second uplink timing adjustment). That is, the first TA command may indicate a first T_{A}. The second TA command may indicate a second T_{A}. The first T_{A} and the second T_{A} may be different.

In response to the reception of the first TA command, the terminal apparatus 1 may adjust (determine) the first uplink timing for the first uplink transmission. In response to the reception of the second TA command, the terminal apparatus 1 may adjust (determine) the second uplink timing for the second uplink transmission. Uplink may be of a PUSCH, a PUCCH, or an SRS. First uplink transmission may be performed in one serving cell. Second uplink transmission may be performed in the one serving cell.

Hereinafter, processing of the medium access control layer processing unit 35 and the radio resource control layer processing unit 36 in the means 1 will be described.

The RRC layer may configure a first time alignment timer and a second time alignment timer. For example, the RRC layer may configure a first time alignment timer and a second time alignment timer for one serving cell. For example, the first time alignment timer may be configured by a first higher layer parameter. For example, the second time alignment timer may be configured by a second higher layer parameter. The first higher layer parameter and the second higher layer parameter may not be the higher layer parameter timeAlignmentTimer. The first time alignment timer may control a first time. The first time may be a time at which the MAC entity regards that at least a first TRP belongs to a first subTAG. The second time alignment timer may control a second time. The second time may be a time at which the MAC entity regards that at least a second TRP belongs to a second subTAG.

The first time alignment timer may be started or restarted based at least on the first TA command. The first time alignment timer may be associated with the first TRP. The first time alignment timer may be associated with the first subTAG. The first subTAG may identify the first TRP from one or multiple TRPs. The first subTAG may include the first TRP. For example, the first subTAG may include one or multiple TRPs corresponding to the first TA. The first time alignment timer may be associated with the first TAG. That is, the first time alignment timer may be associated with the first subTAG and the first TAG. The third time alignment timer may be associated with the first TAG.

The second time alignment timer may be started or restarted based at least on the second TA command. The second time alignment timer may be associated with the second TRP. The second time alignment timer may be associated with the second subTAG. The second subTAG may identify the second TRP from one or multiple TRPs. The second subTAG may include the second TRP. For example, the second subTAG may include one or multiple TRPs corresponding to the second TA. The second time alignment timer may be associated with the second TAG. That is, the second time alignment timer may be associated with the second subTAG and the second TAG. The first TAG and the second TAG may be the same. That is, the third time alignment timer may be associated with the first TAG. For example, the first subTAG and the second subTAG may correspond to one serving cell.

The first time alignment timer may be different from the second time alignment timer. That is, the first time alignment timer may be independent of the second time alignment timer. For example, a first higher layer parameter for configuring the first time alignment timer may be independent of a second higher layer parameter for configuring the second time alignment timer. The MAC entity may manage the first time alignment timer and the second time alignment timer in parallel.

The second TA command may be included in a TA command MAC CE or an absolute TA command MAC CE. For example, the TA command MAC CE or the absolute TA command MAC CE may include a field for identifying one of the second TRP and the second subTAG. That is, the TA command MAC CE may include some or all of the TA command, the TAG ID, the ID for the second subTAG, and the TRP information for the second TRP. The absolute TA command MAC CE may include some or all of the TA command, the TAG ID, the ID for the second subTAG, and the TRP information for the second TRP. The second TA may be determined based at least on the first TA and the second TA command.

In a case that the TA command MAC CE including the first TA command is received and a first N_{TA} is held in the first subTAG, the MAC entity may apply the first TA command. In a case that the TA command MAC CE including the first TA command is received and the first N_{TA} is held in the first subTAG, the MAC entity may start or restart the first time alignment timer associated with the first TA command.

In a case that the TA command MAC CE including the second TA command is received and a second N_{TA} is held in the first subTAG, the MAC entity may apply the second TA command. In a case that the TA command MAC CE including the second TA command is received and the second N_{TA} is held in the second subTAG, the MAC entity may start or restart the second time alignment timer associated with the second TA command. The MAC entity may manage some or all of the first time alignment timer, the second time alignment timer, and the third time alignment timer.

In a case that the first time alignment timer is not running, the MAC entity may apply the first TA command, and may start the first time alignment timer. Furthermore, in a case that Contention resolution in first random access is not successfully completed, the MAC entity may stop the first time alignment timer. In a case that the second time alignment timer is not running, the MAC entity may apply the second TA command, and may start the second time alignment timer. Furthermore, in a case that contention resolution in second random access is not successfully completed, the MAC entity may stop the second time alignment timer. The first time alignment timer and the second time alignment timer may be simultaneously running.

In a case that the first random access preamble is selected from preambles in CBRA, and in a case that the first time alignment timer is running, the MAC entity may ignore the first TA command. In a case that the second random access preamble is selected from preambles in CBRA, and in a case that the second time alignment timer is running, the MAC entity may ignore the second TA command.

The first time alignment timer and the second time alignment timer may correspond to one serving cell. In a case that the first time alignment timer or the second time alignment timer expires, the MAC entity may flush all HARQ buffers for one serving cell. In a case that the first time alignment timer or the second time alignment timer expires, the MAC entity may notify the RRC to release the PUCCH for one serving cell. In a case that the first time alignment timer or the second time alignment timer expires, the MAC entity may notify the RRC to release the SRS for one serving cell. In a case that the first time alignment timer or the second time alignment timer expires, the MAC entity may clear configured downlink assignment and the configured uplink grant. In a case that the first time alignment timer or the second time alignment timer expires, the MAC entity may clear the PUSCH resources for semi-persistent CSI reporting. In a case that the first time alignment timer or the second time alignment timer expires, the MAC entity may regard that all the time alignment timers corresponding to one serving cell expire. In a case that the first time alignment timer expires, the MAC entity may maintain the first N_{TA}. In a case that the second time alignment timer expires, the MAC entity may maintain the second N_{TA}.

In a case that the first time alignment timer is not running (expires), the MAC entity may not perform the first uplink transmission for at least the first TRP. In a case that the second time alignment timer is not running (expires), the MAC entity may not perform the second uplink transmission for at least the second TRP. The first uplink transmission and the second uplink transmission may not include one or both of the random access preamble transmission and the message A transmission.

In a case that reception of at least the first random access response is successfully completed, the MAC entity may apply (process) the first TA command for one serving cell. The MAC entity may apply the first TA command for one or both of the one serving cell and the first TRP based at least on the reception of the first random access response being regarded successful and the first random access preamble being transmitted for the one serving cell.

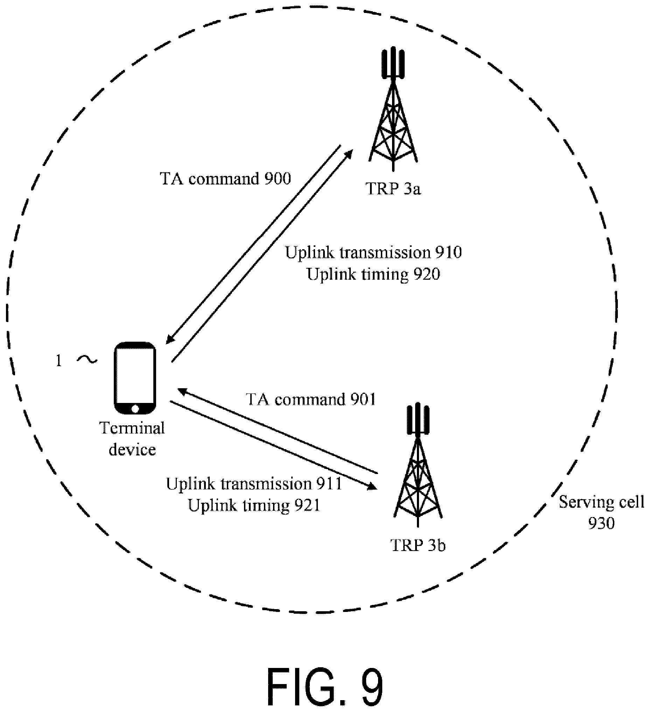

FIG. 9 will be described below.

In FIG. 9, the first TRP may be a TRP 3a (or the base station apparatus 3a). The second TRP may be a TRP 3b (or the base station apparatus 3b). The first TA command may be a TA command 900. The second TA command may be a TA command 901. The first uplink transmission may be uplink transmission 910. The second uplink transmission may be uplink transmission 911. One or both of the first TA and the first uplink timing may be an uplink timing 920. One or both of the second TA and the second uplink timing may be an uplink timing 921. The one serving cell may be a serving cell 920.

FIG. 9 is a diagram illustrating an example of transmission of two uplink channels in one serving cell according to an aspect of the present embodiment. The terminal apparatus 1 may perform the uplink transmission 910 or the uplink transmission 911 in the serving cell 930. The terminal apparatus 1 may adjust the uplink timing 920 for the transmission of the uplink transmission 910 in response to the reception of the TA command 900. The terminal apparatus 1 may adjust the uplink timing 921 for the uplink transmission 911 in response to the reception of the TA command 901.

The terminal apparatus 1 may receive the TA command 900 from the TRP 3a. The terminal apparatus 1 may receive the TA command 901 from the TRP 3a or the TRP 3b. For example, the terminal apparatus 1 may transmit the second random access preamble to the TRP 3b and may receive a second random access response including the TA command 901 from the TRP 3a. In this case, the random access corresponding to the second random access preamble and the second random access response may be CFRA. The terminal apparatus 1 may transmit the second random access preamble to the TRP 3b and may receive a random access response including the TA command 901 from the TRP 3b. In this case, the random access corresponding to the second random access preamble and the second random access response may be CFRA or CBRA.

The first time alignment timer and the second time alignment timer may be configured for the serving cell 920. In a case that the first time alignment timer or the second time alignment timer expires, the MAC entity may flush all HARQ buffers for the serving cell 920. In a case that the first time alignment timer or the second time alignment timer expires, the MAC entity may notify the RRC to release the PUCCH for the serving cell 920. In a case that the first time alignment timer or the second time alignment timer expires, the MAC entity may notify the RRC to release the SRS for the serving cell 920.

Various aspects of apparatuses according to an aspect of the present embodiment will be described below.

(1) In order to accomplish the object described above, an aspect of the present invention is contrived to provide the following means. That is, a first aspect of the present invention is a terminal apparatus including a transmission unit configured to transmit a first random access preamble in first random access and transmit a second random access preamble in second random access, and a reception unit configured to receive a first TA command in the first random access and receive a second TA command in the second random access, in which a first uplink timing is adjusted in one serving cell based at least on the first TA command, a second uplink timing is adjusted in the one serving cell based at least on the second TA command, and one of the first uplink timing and the second uplink timing is used based on certain information. In addition, the first random access may be CBRA and the second random access may be CFRA. In addition, the certain information may be one of TRP information and subTAG, and the reception unit may receive the certain information or a parameter including the certain information.
(2) A second aspect of the present invention is a base station apparatus including a reception unit configured to receive a first random access preamble in first random access and receive a second random access preamble in second random access, and a transmission unit configured to transmit a first TA command in the first random access and transmit a second TA command in the second random access, in which a first uplink timing is adjusted in one serving cell based at least on the first TA command, a second uplink timing is adjusted in the one serving cell based at least on the second TA command, and one of the first uplink timing and the second uplink timing is used based on certain information.
(3) A third aspect of the present invention is a terminal apparatus including a radio resource control layer processing unit configured to configure a first time alignment timer and a second time alignment timer for one serving cell, and a medium access control layer processing unit, in which the medium access control layer processing unit starts or restarts the first time alignment timer based at least on reception of a first TA command, the medium access control layer processing unit starts or restarts the second time alignment timer based at least on reception of a second TA command, and in a case that the first time alignment timer or the second time alignment timer expires, the medium access control layer processing unit flushes all HARQ buffers for the one serving cell.
(4) A fourth aspect of the present invention is a base station apparatus including a radio resource control layer processing unit configured to configure a first time alignment timer and a second time alignment timer for one serving cell, and a medium access control layer processing unit, in which the medium access control layer processing unit starts or restarts the first time alignment timer based at least on reception of a first TA command, the medium access control layer processing unit starts or restarts the second time alignment timer based at least on reception of a second TA command, and in a case that the first time alignment timer or the second time alignment timer expires, the medium access control layer processing unit flushes all HARQ buffers for the one serving cell.

A program running on the base station apparatus 3 and the terminal apparatus 1 according to an aspect of the present invention may be a program (a program that causes a computer to function) that controls a Central Processing Unit (CPU) and the like so as to implement the functions of the above-described embodiment according to an aspect of the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. Furthermore, a circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although, the embodiments of the present invention have been described in detail above referring to the drawings, the specific configuration is not limited to the embodiments and includes, for example, design changes within the scope that do not depart from the gist of the present invention. For an aspect of the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1 (1A, 1B, 1C) Terminal apparatus
3 Base station apparatus
10, 30 Radio transmission and/or reception unit
10a, 30a Radio transmission unit
10b, 30b Radio reception unit
11, 31 Antenna unit
12, 32 RF unit
13, 33 Baseband unit
14, 34 Higher layer processing unit
15, 35 Medium access control layer processing unit
16, 36 Radio resource control layer processing unit
91, 92, 93, 94 Search space set
300 Component carrier
301 Primary cell
302, 303 Secondary cell
700 Set of resource elements for PSS
710, 711, 712, 713 Set of resource elements for PBCH and DMRS for PBCH
720 Set of resource elements for SSS
3000 Point
3001, 3002 Resource grid
3003, 3004 BWP
3011, 3012, 3013, 3014 Offset
3100, 3200 Common resource block set
900, 901 TA command
910, 911 Uplink transmission
920, 921 Uplink timing
930 Serving cell

## Claims

1. A terminal apparatus comprising:
a radio resource control layer processing unit configured to configure a first time alignment timer and a second time alignment timer for one serving cell; and
a medium access control layer processing unit,
wherein the medium access control layer processing unit starts or restarts the first time alignment timer based at least on reception of a first TA command,
the medium access control layer processing unit starts or restarts the second time alignment timer based at least on reception of a second TA command, and
in a case that the first time alignment timer or the second time alignment timer expires, the medium access control layer processing unit flushes all HARQ buffers for the one serving cell.

2. A base station apparatus comprising:
a radio resource control layer processing unit configured to configure a first time alignment timer and a second time alignment timer for one serving cell; and
a medium access control layer processing unit,
wherein the medium access control layer processing unit starts or restarts the first time alignment timer based at least on reception of a first TA command,
the medium access control layer processing unit starts or restarts the second time alignment timer based at least on reception of a second TA command, and
in a case that the first time alignment timer or the second time alignment timer expires, the medium access control layer processing unit flushes all HARQ buffers for the one serving cell.

3. A communication method used by a terminal apparatus, the method comprising:
a first step of configuring, in a radio resource control layer processing unit, a first time alignment timer and a second time alignment timer for one serving cell; and
a second step in a medium access control layer processing unit,
wherein, in the first step, the medium access control layer processing unit starts or restarts the first time alignment timer based at least on reception of a first TA command,
in the first step, the medium access control layer processing unit starts or restarts the second time alignment timer based at least on reception of a second TA command, and
in the first step, in a case that the first time alignment timer or the second time alignment timer expires, the medium access control layer processing unit flushes all HARQ buffers for the one serving cell.
